# EUROPEAN PATENT APPLICATION

(11) **EP 4 773 385 A1**
(43) Date of publication of application: **08.07.2026**
(21) Application number: 24919386.3
(22) Date of filing: 26.01.2024
(51) Int. Cl.: H01M 50/342

(54) **BATTERY CELL, BATTERY, AND ELECTRICAL DEVICE**

(71) Applicant: Contemporary Amperex Technology Co., Limited, Ningde, Fujian 352100 (CN)
(72) Inventor: WU, Kai, Ningde, Fujian 352100 (CN); LIU, Sike, Ningde, Fujian 352100 (CN); GU, Mingguang, Ningde, Fujian 352100 (CN); LI, Yao, Ningde, Fujian 352100 (CN); CHEN, Shilong, Ningde, Fujian 352100 (CN)
(74) Representative: Kraus & Lederer PartGmbB
(86) International application number: PCT/CN2024/074322
(87) International publication number: WO 2025/156288

(57) **Abstract**

A battery cell (20), a battery (100), and an electric device are disclosed. The battery cell (20) includes a housing (21) and a pressure relief component (214), where the housing (21) has a first wall portion (211), the first wall portion (211) has a first outer surface (2111) facing away from an interior of the housing (21). The pressure relief component (214) is disposed on the first wall portion (211), where the pressure relief component (214) includes a first weak portion (2145), and the pressure relief component (214) is configured as capable of rupturing along at least a part of the first weak portion (2145) during pressure relief of the battery cell (20). A minimum radial dimension of the first outer surface (2111) is A, a radial direction is a direction passing through a center point of the first outer surface (2111), and an outer edge of the first outer surface (2111) is offset toward the center point of the first outer surface (2111) by a predetermined distance L₁ to form a first edge (2143), where L₁ = 0.05*A. Along a thickness direction of the first wall portion (211), a projection of the first weak portion (2145) on the first outer surface (2111) is located within the first edge (2143). The first edge (2143) defines a first region (2144) with lower stiffness, so that a thickness of the first weak portion (2145) located in the first region (2144) is greater under the same burst pressure, making the first weak portion (2145) less likely to rupture prematurely, thereby improving the lifespan of the battery cell (20).

## Description

### TECHNICAL FIELD

This application relates to the field of batteries, and specifically, to a battery cell, a battery, and an electric device.

### BACKGROUND

Batteries are widely used in the field of new energy, such as in electric vehicles and new energy vehicles. New energy vehicles and electric vehicles have become a new development trend of the automotive industry. The development of battery technology requires simultaneous consideration of multiple design factors, such as performance parameters like energy density, discharge capacity, and charge-discharge rate. Additionally, the lifespan of the battery needs to be taken into account. However, the lifespan of existing batteries is relatively short.

### SUMMARY

Embodiments of this application are intended to provide a battery cell, a battery, and an electric device, so as to address the issue of short battery lifespan in the related art.

According to a first aspect, an embodiment of this application provides a battery cell, the battery cell including a housing and a pressure relief component. The housing has a first wall portion, where the first wall portion has a first outer surface facing away from an interior of the housing. The pressure relief component is disposed on the first wall portion, where the pressure relief component includes a first weak portion, and the pressure relief component is configured as capable of rupturing along at least a part of the first weak portion during pressure relief of the battery cell. A minimum radial dimension of the first outer surface is A, a radial direction is a direction passing through a center point of the first outer surface, and an outer edge of the first outer surface is offset toward the center point of the first outer surface by a predetermined distance L₁ to form a first edge, where L₁ = 0.05*A; and along a thickness direction of the first wall portion, a projection of the first weak portion on the first outer surface is located within the first edge.

In the above technical solution, the outer edge of the first outer surface is offset toward the center point of the first outer surface by 0.05A to form the first edge, and the first edge defines a first region on the first wall portion. The first region is close to the center of the wall portion, and the first region is a region with relatively small stiffness, and its ability to resist deformation is relatively weak. When the battery cell releases internal pressure, the first region undergoes significant deformation under the action of gas, causing the first weak portion disposed in the first region to easily deform and rupture. Therefore, under the same burst pressure, the thickness of the first weak portion disposed in the first region can be greater. As a result, during normal use of the battery cell, the first weak portion is less likely to rupture prematurely due to pressure changes inside the battery cell or external impacts, reducing the risk of premature rupture of the first weak portion and enhancing the lifespan of the battery cell. Furthermore, a greater thickness of the first weak portion makes manufacturing easier, lowering a precision requirement for manufacturing equipment.

In an optional technical solution of the embodiments of this application, the housing is a cylindrical structure, the housing includes a second wall portion, the second wall portion surrounds the first wall portion, the first outer surface is a circular structure, and the minimum radial dimension of the first outer surface is a diameter of the circular surface.

In the above technical solution, the housing is a cylindrical structure, and the second wall portion surrounds the first wall portion, so the second wall portion is a peripheral wall of the housing, and the first wall portion is connected to one end of the second wall portion. In this case, the first outer surface is a circular structure, the minimum radial dimension of the first outer surface is the diameter of the circular surface, and the first edge is a circle with a diameter of 0.9A.

In an optional technical solution of the embodiments of this application, the housing is a prismatic structure, the first outer surface is a rectangular structure, and the first outer surface includes two first long sides and two first short sides, where the two first long sides are disposed opposite each other along a width direction of the first wall portion, the two first short sides are disposed opposite each other along a length direction of the first wall portion, and the two first long sides and the two first short sides are offset toward the center point of the first outer surface by the predetermined distance L₁ to form the first edge.

In the above technical solution, the first edge is a rectangular structure, the long sides of the first edge are formed by offsetting the two first long sides of the first outer surface toward the center point of the first outer surface, and the short sides of the first edge are formed by offsetting the two first short sides of the first outer surface toward the center point of the first outer surface.

In an optional technical solution of the embodiments of this application, the first weak portion includes at least one priority burst region, where the priority burst region is configured to rupture earlier than other regions of the first weak portion during pressure relief of the battery cell, a minimum distance between a projection of the priority burst region on the first outer surface along the thickness direction of the first wall portion and the center point of the first outer surface is L₂, and a minimum thickness of the priority burst region is D, satisfying: 5 mm ≤ L₂ ≤ 40 mm, and 0.05 mm ≤ D ≤ 0.6 mm.

In the above technical solution, the first weak portion has a priority burst region, and during pressure relief of the battery cell, the priority burst region ruptures first, and then other regions of the first weak portion gradually rupture along the extension direction of the first weak portion. When D is greater than or equal to 0.05 mm, the minimum thickness of the priority burst region is relatively large, making the priority burst region less likely to rupture prematurely due to pressure changes inside the battery cell or external impacts, which is beneficial to enhancing the lifespan of the battery cell. When D is less than or equal to 0.6 mm, the minimum thickness of the priority burst region is not excessively large, enabling the priority burst region to rupture promptly during pressure relief of the battery cell, which is beneficial to improving the timeliness of pressure relief of the battery cell. Therefore, when 0.05 mm ≤ D ≤ 0.6 mm, the priority burst region is less likely to rupture due to pressure changes inside the battery cell or external impacts, and the priority burst region can also rupture promptly, which is beneficial to improving the timeliness of pressure relief of the battery cell. When L₂ is greater than or equal to 5 mm, the minimum distance between the projection of the priority burst region on the first outer surface along the thickness direction of the first wall portion and the center point of the first outer surface is relatively large, and the stiffness at the position of the priority burst region is higher, making the priority burst region less likely to rupture prematurely due to pressure changes inside the battery cell or external impacts during normal use of the battery cell, reducing the risk of premature rupture of the priority burst region. When L₂ is less than or equal to 40 mm, the minimum distance between the projection of the priority burst region on the first outer surface along the thickness direction of the first wall portion and the center point of the first outer surface is not excessively large, which allows the priority burst region to undergo significant deformation under the action of gas during pressure relief of the battery cell, enabling the priority burst region to rupture promptly, thereby improving the timeliness of pressure relief of the battery cell. Therefore, when 5 mm ≤ L₂ ≤ 40 mm, the priority burst region is less likely to rupture due to pressure changes inside the battery cell or external impacts, and the priority burst region can also rupture promptly, which is beneficial to improving the timeliness of pressure relief of the battery cell.

In an optional technical solution of the embodiments of this application, 0.1 mm ≤ D ≤ 0.5 mm.

In the above technical solution, when D is greater than or equal to 0.1 mm, the risk of the priority burst region rupturing due to pressure changes inside the battery cell or external impacts is further reduced, which is beneficial to enhancing the lifespan of the battery cell. When D is less than or equal to 0.5 mm, the priority burst region can rupture more promptly during pressure relief of the battery cell, which is beneficial to improving the timeliness of pressure relief of the battery cell. Therefore, when 0.1 mm ≤ D ≤ 0.5 mm, the priority burst region is even less likely to rupture due to pressure changes inside the battery cell or external impacts, and the priority burst region can rupture more promptly during pressure relief of the battery cell, which is beneficial to improving the timeliness of pressure relief of the battery cell.

In an optional technical solution of the embodiments of this application, 10 mm ≤ L₂ ≤ 30 mm.

In the above technical solution, when L₂ is greater than or equal to 10 mm, the stiffness at the position of the priority burst region is higher, making the priority burst region even less likely to rupture prematurely due to pressure changes inside the battery cell or external impacts, reducing the risk of premature rupture of the priority burst region. When L₂ is less than or equal to 30 mm, the priority burst region undergoes significant deformation under the action of gas during pressure relief of the battery cell, enabling the priority burst region to rupture more promptly, which is beneficial to improving the timeliness of pressure relief of the battery cell. Therefore, when 10 mm ≤ L₂ ≤ 30 mm, the priority burst region is less likely to rupture due to pressure changes inside the battery cell or external impacts, and the priority burst region can also rupture promptly, which is beneficial to improving the timeliness of pressure relief of the battery cell.

In an optional technical solution of the embodiments of this application, the pressure relief component is provided with a first groove; the pressure relief component has the first weak portion formed in a region where the first groove is provided; the first groove includes a first groove segment and a second groove segment, where the first groove segment and the second groove segment are connected, a centerline of a bottom surface of the first groove segment intersects with a centerline of a bottom surface of the second groove segment at a first intersection point, an extension direction of the centerline of the bottom surface of the first groove segment is parallel to an extension direction of the first groove segment, and an extension direction of the centerline of the bottom surface of the second groove segment is parallel to an extension direction of the second groove segment; and a region of the first weak portion within a range with a radius R and centered at the first intersection point is the priority burst region, where A > R = 5 mm.

In the above technical solution, the stress at the intersection position of the first groove segment and the second groove segment is more concentrated, and a region of the first weak portion within a range with a radius R and centered at the first intersection point is the priority burst region. During pressure relief of the battery cell, the priority burst region ruptures first, and then the first groove segment and the second groove segment gradually rupture along their extension directions, thereby implementing rapid pressure relief of the battery cell.

In an optional technical solution of the embodiments of this application, the first groove includes a third groove segment, where the first groove segment and the third groove segment are disposed opposite each other, the second groove segment connects the first groove segment and the third groove segment, the centerline of the bottom surface of the second groove segment intersects with a centerline of a bottom surface of the third groove segment at a second intersection point, an extension direction of the centerline of the bottom surface of the third groove segment is parallel to an extension direction of the third groove segment, and a region of the first weak portion within a range with a radius R and centered at the second intersection point is the priority burst region.

In the above technical solution, the stress at the intersection position of the second groove segment and the third groove segment is more concentrated, and a region of the first weak portion within a range with a radius R of 5 mm and centered at the second intersection point is also the priority burst region. During pressure relief of the battery cell, the two priority burst regions rupture first, and then the first groove segment, the second groove segment, and the third groove segment gradually rupture along their extension directions, thereby implementing rapid pressure relief of the battery cell.

In an optional technical solution of the embodiments of this application, a maximum radial dimension of the first outer surface is B, satisfying: B ≥ A ≥ 10 mm.

In the above technical solution, when A is greater than or equal to 10 mm, the minimum radial dimension of the first outer surface is relatively large, and the difference in stiffness between the region of the first wall portion near the outer edge of the first outer surface and the region near the center point of the first outer surface is relatively large. In this case, arranging the first weak portion within the first edge can provide better effect. The maximum radial dimension of the first outer surface may be equal to the minimum radial dimension of the first outer surface, for example, when the first outer surface is a circular structure, the maximum radial dimension of the first outer surface and the minimum radial dimension of the first outer surface are both the diameter of the circular structure. The maximum radial dimension of the first outer surface may be greater than the minimum radial dimension of the first outer surface. For example, when the first outer surface is a rectangular structure, the maximum radial dimension of the first outer surface is the length of the diagonal of the rectangular structure, and the minimum radial dimension is the width of the rectangular structure.

In an optional technical solution of the embodiments of this application, a thickness of a region of the pressure relief component where the first weak portion is not provided is D₁, satisfying: 0.1 mm ≤ D₁ ≤ 10 mm.

In the above technical solution, when D₁ is greater than or equal to 0.1 mm, the thickness of the region of the pressure relief component where the first weak portion is not provided is larger, and the minimum thickness of the first weak portion disposed on the pressure relief component can also be larger, so that during normal use of the battery cell, the first weak portion is less likely to rupture prematurely due to pressure changes inside the battery cell or external impacts, reducing the risk of premature rupture of the first weak portion and enhancing the lifespan of the battery cell. When D₁ is less than or equal to 10 mm, the thickness of the region of the pressure relief component where the first weak portion is not provided is not excessively large, so that there is no need to remove much material during processing of the first weak portion, reducing material waste and lowering processing difficulty. Therefore, when 0.1 mm ≤ D₁ ≤ 10 mm, the thickness of the processed first weak portion is appropriate, reducing the risk of premature rupture of the first weak portion, which is beneficial to enhancing the lifespan of the battery cell, as well as reducing material waste and lowering processing difficulty.

In an optional technical solution of the embodiments of this application, the housing includes a second wall portion adjacent to the first wall portion, where the second wall portion and the first wall portion are directly connected.

In the above technical solution, the second wall portion is directly connected to the first wall portion without requiring a rounded transition between the second wall portion and the first wall portion, making manufacturing simpler and more convenient.

In an optional technical solution of the embodiments of this application, the housing includes a shell and an end cap, where the shell has an opening on at least one end; and the end cap is in one-to-one correspondence with the opening, and the end cap closes the opening; where at least one wall of the shell is the first wall portion.

In the above technical solution, when the shell includes the first wall portion, the pressure relief component is disposed on one wall of the shell, and the fluid medium ejected from the pressure relief component is less likely to act on other electrical connection structures on the end cap, reducing the risk of short circuits in the battery cell.

In an optional technical solution of the embodiments of this application, a thickness of a region of the pressure relief component where the first weak portion is not provided is less than a thickness of the end cap.

In the above technical solution, by setting the thickness of the region of the pressure relief component where the first weak portion is not provided to be less than the thickness of the end cap, pressure is easier to relieve from the pressure relief component during pressure relief of the battery cell.

In an optional technical solution of the embodiments of this application, a material of the pressure relief component includes an aluminum material or a steel material.

In the above technical solution, using aluminum or steel as the material of the pressure relief component provides the first weak portion with a relatively high strength, making the first weak portion less likely to rupture prematurely due to pressure changes inside the battery cell or external impacts during normal use of the battery cell. This is beneficial to reducing the risk of premature rupture of the first weak portion and enhancing the lifespan of the battery cell.

In an optional technical solution of the embodiments of this application, the pressure relief component is integrally formed with the first wall portion.

In the above technical solution, the pressure relief component is integrally formed with the first wall portion, which requires no additional welding or bonding processes. This is beneficial to reducing the risk of leakage in the pressure relief component, and also facilitates consistent burst pressures across multiple processed battery cells during production.

In an optional technical solution of the embodiments of this application, the pressure relief component is separately formed from the first wall portion, the first wall portion is provided with a pressure relief hole, and the pressure relief component is installed on the first wall portion and covers the pressure relief hole.

In the above technical solution, the pressure relief component is separately formed from the first wall portion and installed on the first wall portion, facilitating processing and manufacturing.

According to a second aspect, an embodiment of this application further provides a battery, where the battery includes the foregoing battery cell.

According to a third aspect, an embodiment of this application further provides an electric device, where the electric device includes the foregoing battery cell.

### DESCRIPTION OF THE DRAWINGS

To describe the technical solutions in the embodiments of this application more clearly, the following briefly describes the accompanying drawings for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a structure of a battery according to some embodiments of this application;
FIG. 3 is a schematic structural diagram of a battery cell according to some embodiments of this application;
FIG. 4 is an exploded view of a structure of a battery cell according to some embodiments of this application;
FIG. 5 is a bottom view of a housing of a battery cell according to some embodiments of this application;
FIG. 6 is a partial cross-sectional view of a housing of a battery cell according to some embodiments of this application;
FIG. 7 is a schematic structural diagram of a battery cell according to some other embodiments of this application;
FIG. 8 is a top view of a housing of a battery cell according to some other embodiments of this application; and
FIG. 9 is a bottom view of a housing of a battery cell according to still some other embodiments of this application.

Reference signs: 1000. vehicle; 100. battery; 10. box; 11. first box body; 12. second box body; 20. battery cell; 21. housing; 211. first wall portion; 2111. first outer surface; 21111. first long side; 21112. first short side; 2112. first inner surface; 212. second wall portion; 2121. second outer surface; 2131. arc transition surface; 214. pressure relief component; 2141. first groove; 2141a. first groove segment; 2141b. second groove segment; 2141c. third groove segment; 2142. priority burst region; 21421. first intersection point; 21422. second intersection point; 2143. first edge; 2144. first region; 2145. first weak portion; 215. shell; 2151. opening; 216. end cap; 22. electrode assembly; 221. tab; 23. electrode terminal; 24. current collecting member; 200. controller; and 300. motor.

### DESCRIPTION OF THE EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification, claims, and brief description of drawings of this application are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The phrase "embodiment" appearing in various places in this specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between the contextually associated objects.

In the embodiments of this application, the same reference signs denote the same members. For brevity, in different embodiments, detailed descriptions of the same members are not repeated. It should be understood that as shown in the accompanying drawings, dimensions such as thickness, length, and width of various components and dimensions such as thickness, length, and width of integrated apparatuses in the embodiments of this application are merely for illustrative purposes and should not constitute any limitations on this application.

The term "multiple" in this application refers to two or more (including two).

In the embodiments of this application, the battery cell may be a secondary battery. The secondary battery is a battery cell that can be charged after discharge to activate active materials for continuous use.

The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickelcadmium battery, a lead-acid battery, or the like, which is not limited in the embodiments of this application.

A battery cell typically includes an electrode assembly. The electrode assembly includes a positive electrode, a negative electrode, and a separator. During the charge and discharge process of the battery cell, active ions (for example, lithium ions) intercalate and deintercalate between the positive electrode and the negative electrode. The separator is disposed between the positive electrode and the negative electrode, preventing short circuits between the positive and negative electrodes while allowing active ions to pass through.

In some embodiments, the positive electrode may be a positive electrode plate, and the positive electrode plate may include a positive electrode current collector and a positive electrode active material disposed on at least one surface of the positive electrode current collector.

In an example, the positive electrode current collector has two opposite surfaces in its thickness direction, and the positive electrode active material is disposed on either one or both of the two opposite surfaces of the positive electrode current collector.

In an example, the positive electrode current collector may be a metal foil or a composite current collector. For example, as a metal foil, silver-plated aluminum, silver-plated stainless steel, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on the polymer material substrate (for example, a substrate of polypropylene, polyethylene terephthalate, polybutylene terephthalate, polystyrene, polyethylene, or the like).

In an example, the positive electrode active material may include at least one of the following materials: lithium-containing phosphate, lithium transition metal oxide, and respective modified compounds thereof. However, this application is not limited to these materials, and other conventional materials that can be used as positive electrode active materials for batteries may also be used. One type of these positive electrode active materials may be used alone, or two or more types may be used in combination. Examples of the lithium-containing phosphate may include, but are not limited to, at least one of lithium iron phosphate (for example, LiFePO₄ (also abbreviated as LFP)), a composite material of lithium iron phosphate and carbon, lithium manganese phosphate (for example, LiMnPO₄), a composite material of lithium manganese phosphate and carbon, lithium iron manganese phosphate, and a composite material of lithium iron manganese phosphate and carbon. Examples of lithium transition metal oxides may include, but are not limited to, at least one of lithium cobalt oxide (for example, LiCoO₂), lithium nickel oxide (for example, LiNiO₂), lithium manganese oxide (for example, LiMnO₂, LiMn₂O₄), lithium nickel cobalt oxide, lithium manganese cobalt oxide, lithium nickel manganese oxide, lithium nickel cobalt manganese oxide (for example, LiNiₗ₁₃Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi_{0.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁)), lithium nickel cobalt aluminum oxide (for example, LiNi_{0.85}Co_{0.15}Al_{0.05}O₂), and modified compounds thereof.

In some embodiments, the positive electrode may be foam metal. The foam metal may be foam nickel, foam copper, foam aluminum, foam alloy, or the like. When foam metal is used as the positive electrode, the surface of the foam metal may not be provided with a positive electrode active material, and certainly, it may alternatively be provided with a positive electrode active material. In an example, the foam metal may also be filled or/and deposited with a lithium source material, potassium metal, or sodium metal, where the lithium source material is lithium metal and/or a lithium-rich material.

In some embodiments, the negative electrode may be a negative electrode plate, where the negative electrode plate may include a negative electrode current collector.

In an example, the negative electrode current collector may be a metal foil, foam metal, or a composite current collector. For example, as a metal foil, silver-plated aluminum or stainless steel, stainless steel, copper, aluminum, nickel, carbon electrode, nickel, titanium, or the like may be used. The foam metal may be foam nickel, foam copper, foam aluminum, foam alloy, or the like. The composite current collector may include a polymer material base layer and a metal layer. The composite current collector may be formed by forming a metal material (copper, copper alloy, nickel, nickel alloy, titanium, titanium alloy, silver, silver alloy, or the like) on the polymer material substrate (for example, a substrate of polypropylene, polyethylene terephthalate, polybutylene terephthalate, polystyrene, polyethylene, or the like).

In an example, the negative electrode plate may include a negative electrode current collector and a negative electrode active material disposed on at least one surface of the negative electrode current collector.

In an example, the negative electrode current collector has two opposite surfaces in its thickness direction, and the negative electrode active material is disposed on either one or both of the two opposite surfaces of the negative electrode current collector.

In an example, the negative electrode active material may be a negative electrode active material known in the art for battery cells. In an example, the negative electrode active material may include at least one of the following materials: artificial graphite, natural graphite, soft carbon, hard carbon, silicon-based materials, tin-based materials, lithium titanate, or the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, and other conventional materials that can be used as negative electrode active materials for batteries may also be used. One type of these negative electrode active materials may be used alone, or two or more types may be used in combination.

In some embodiments, a material of the positive electrode current collector may be aluminum, and a material of the negative electrode current collector may be copper.

In some embodiments, the electrode assembly further includes a separator, where the separator is disposed between the positive electrode and the negative electrode.

In some embodiments, the separator is a separator film. The type of the separator film is not limited, and any well-known porous structure separator film with good chemical and mechanical stability may be used.

In an example, a material of the separator film may include at least one of glass fiber, non-woven fabric, polyethylene, polypropylene, and polyvinylidene fluoride. The separator film may be a single-layer film or a multi-layer composite film. When the separator film is a multi-layer composite film, materials of the layers may be the same or different. The separator may be a single component located between the positive and negative electrodes or may be attached to a surface of the positive or negative electrode.

In some embodiments, the separator is a solid-state electrolyte. The solid-state electrolyte is disposed between the positive electrode and the negative electrode, serving both to conduct ions and to isolate the positive and negative electrodes.

In some embodiments, the battery cell further includes an electrolyte. The electrolyte conducts ions between the positive and negative electrodes. The electrolyte may be in liquid, gel, or solid state. The liquid electrolyte includes an electrolyte salt and a solvent.

In some embodiments, the electrolyte salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone. The solvent may alternatively be an ether-based solvent. The ether-based solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyl tetrahydrofuran, diphenyl ether, and crown ether.

The gel-state electrolyte includes a polymer as a skeleton network of the electrolyte, paired with an ionic liquid-lithium salt.

The solid-state electrolyte includes a polymer solid-state electrolyte, an inorganic solid-state electrolyte, and a composite solid-state electrolyte.

In an example, the polymer solid-state electrolyte may be polyether (polyethylene oxide), polysiloxane, polycarbonate, polyacrylonitrile, polyvinylidene fluoride, polymethyl methacrylate, single-ion polymer, polyionic liquid-lithium salt, cellulose, or the like.

In an example, the inorganic solid-state electrolyte may include one or more of oxide solid electrolyte (crystalline perovskite, sodium superionic conductor, garnet, or amorphous LiPON thin film), sulfide solid electrolyte (crystalline lithium superionic conductor (lithium germanium phosphorus sulfide, or argyrodite), or amorphous sulfide), halide solid electrolyte, nitride solid electrolyte, and hydride solid electrolyte.

In an example, the composite solid-state electrolyte is formed by adding an inorganic solid-state electrolyte filler to a polymer solid-state electrolyte.

In some embodiments, the electrode assembly is a wound structure. The positive electrode plate and the negative electrode plate are wound into a wound structure.

In some embodiments, the electrode assembly is a laminated structure.

In an example, multiple positive electrode plates and multiple negative electrode plates may be provided, where the multiple positive electrode plates and the multiple negative electrode plates are alternately stacked.

In an example, multiple positive electrode plates may be provided, and the negative electrode plate may be folded to form multiple stacked folding segments, with one positive electrode plate sandwiched between adjacent folding segments.

In an example, both the positive electrode plate and the negative electrode plate may be folded to form multiple stacked folding segments.

In an example, multiple separators may be provided, separately disposed between any adjacent positive electrode plates or negative electrode plates.

In an example, the separator may be continuously disposed, arranged between any adjacent positive electrode plates or negative electrode plates by folding or winding.

In some embodiments, the electrode assembly may be cylindrical, flat, prismatic, or any other shapes.

In some embodiments, the electrode assembly is provided with a tab. The tab can conduct current from the electrode assembly. The tab includes a positive tab and a negative tab.

In some embodiments, the battery cell may include a housing. The housing is used to package the electrode assembly, electrolyte, and other components. The housing may be a steel shell, an aluminum shell, a plastic shell (for example, polypropylene), a composite metal shell (for example, a copper-aluminum composite shell), an aluminum-plastic film, or the like.

In an example, the battery cell may be a cylindrical battery cell, a prismatic battery cell, a pouch battery cell, or a battery cell of other shapes. The prismatic battery cell includes, but is not limited to, a square-shell battery cell, a blade-shaped battery cell, a polyhedral battery cell, where the polyhedral battery cell is, for example, a hexagonal prismatic battery cell.

The battery mentioned in the embodiments of this application refers to a single physical module including one or more battery cells to provide higher voltage and capacity.

In some embodiments, the battery may be a battery module. When there are multiple battery cells, the multiple battery cells are arranged and fixed to form one battery module.

In some embodiments, the battery may be a battery pack, where the battery pack includes a box and a battery cell, the battery cell or the battery module being accommodated in the box.

In some embodiments, the box may be part of a chassis structure of a vehicle. For example, a portion of the box may form at least part of the floor of the vehicle, or a portion of the box may form at least part of the crossbeam and longitudinal beam of the vehicle.

In some embodiments, the battery may be an energy storage apparatus. The energy storage apparatus includes an energy storage container, an energy storage cabinet, or the like.

Batteries are widely used in the field of new energy, such as in electric vehicles and new energy vehicles. New energy vehicles and electric vehicles have become a new development trend of the automotive industry. The development of battery technology requires simultaneous consideration of multiple design factors, such as performance parameters like energy density, discharge capacity, and charge-discharge rate. Additionally, the lifespan of the battery needs to be taken into account. However, the lifespan of existing batteries is relatively short.

For a battery cell, to improve reliability of the battery cell, the prior art involves welding a pressure relief mechanism onto the battery cell. The pressure relief mechanism is provided with a weak portion, and the weak portion defines a pressure relief portion. When internal pressure of the battery cell reaches a burst pressure, the weak portion ruptures, and the pressure relief portion opens to release the internal pressure of the battery cell, reducing the risk of explosion or fire of the battery cell.

However, the weak portion often ruptures prematurely, that is, the weak portion ruptures before the internal pressure of the battery cell reaches the desired burst pressure, leading to premature failure of the battery cell and a short lifespan of the battery cell.

In view of this, an embodiment of this application provides a battery cell, the battery cell including a housing and a pressure relief component. The housing has a first wall portion, where the first wall portion has a first outer surface facing away from an interior of the housing, and the pressure relief component is disposed on the first wall portion. The pressure relief component includes a first weak portion, and the pressure relief component is configured as capable of rupturing along at least a part of the first weak portion during pressure relief of the battery cell. A minimum radial dimension of the first outer surface is A, a radial direction is a direction passing through a center point of the first outer surface, and an outer edge of the first outer surface is offset toward the center point of the first outer surface by a predetermined distance L₁ to form a first edge, where L₁ = 0.05*A. Along a thickness direction of the first wall portion, a projection of the first weak portion on the first outer surface is located within the first edge.

The outer edge of the first outer surface is offset toward the center point of the first outer surface by 0.05A to form the first edge, and the first edge defines a first region on the first wall portion. The first region is close to the center of the wall portion, and the first region is a region with relatively small stiffness, and its ability to resist deformation is relatively weak. When the battery cell releases internal pressure, the first region undergoes significant deformation under the action of gas, causing the first weak portion disposed in the first region to easily deform and rupture. Therefore, under the same burst pressure, the thickness of the first weak portion disposed in the first region can be greater. As a result, during normal use of the battery cell, the first weak portion is less likely to rupture prematurely due to pressure changes inside the battery cell or external impacts, reducing the risk of premature rupture of the first weak portion and enhancing the lifespan of the battery cell. Furthermore, a greater thickness of the first weak portion makes manufacturing easier, lowering a precision requirement for manufacturing equipment.

The battery cell disclosed in the embodiments of this application can be used in, but not limited to, electric apparatuses such as vehicles, ships, or aircraft. The battery cell, battery, and the like disclosed in this application can be used to constitute a power system for the electric apparatus, which is beneficial to improving the lifespan of the battery cell.

An embodiment of this application provides an electric apparatus using a battery as a power source. The electric apparatus may be, but is not limited to, a mobile phone, a tablet, a laptop computer, an electric toy, an electric tool, an electric bicycle, an electric vehicle, a ship, a spacecraft, or the like. The electric toy may include a fixed or mobile electric toy, such as a game console, an electric toy car, an electric toy ship, or an electric toy airplane. The spacecraft may include an airplane, a rocket, a space shuttle, a spaceship, and the like.

For ease of description, the electric apparatus of an embodiment of this application being a vehicle is used as an example for description of the following embodiments.

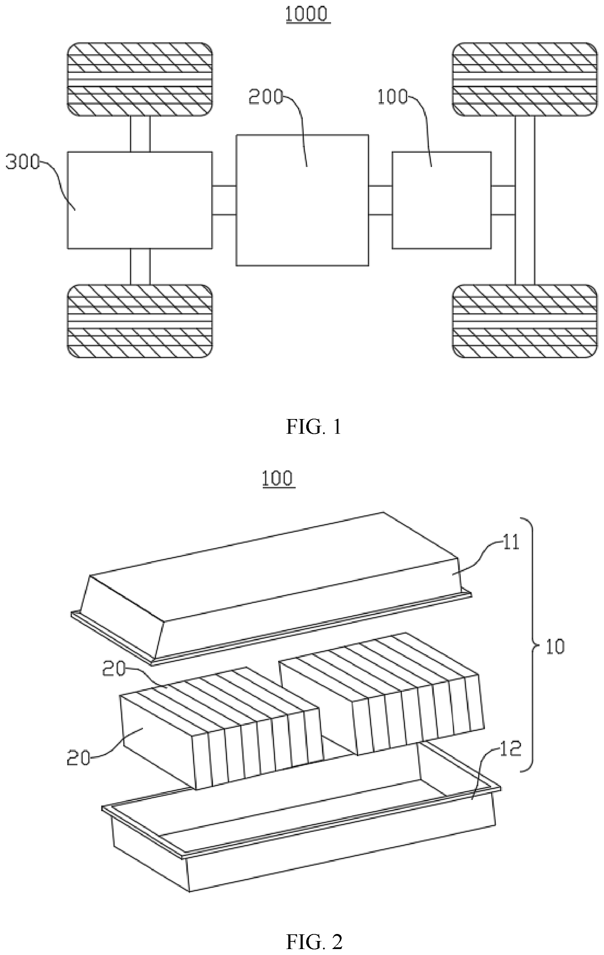

Referring to FIG. 1, FIG. 1 is a schematic structural diagram of a vehicle 1000 according to some embodiments of this application. The vehicle 1000 may be a fuel vehicle, a gas vehicle, or a new energy vehicle, and the new energy vehicle may be a battery electric vehicle, a hybrid vehicle, an extended-range vehicle, or the like. A battery 100 is provided inside the vehicle 1000, and the battery 100 may be disposed at the bottom of the vehicle 1000, the front of the vehicle 1000, or the rear of the vehicle 1000. The battery 100 may be configured to supply power to the vehicle 1000. For example, the battery 100 may be used as an operational power source a utility power source, or the like for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 may be used not only as an operational power source for the vehicle 1000 but also as a driving power source for the vehicle 1000, replacing or partially replacing fuel or natural gas to provide traction for the vehicle 1000.

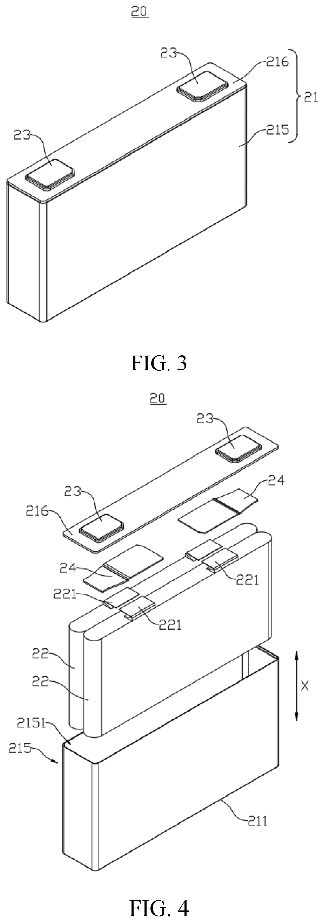

Referring to FIG. 2 and FIG. 3, FIG. 2 is an exploded view of a structure of a battery 100 according to some embodiments of this application, and FIG. 3 is a schematic structural diagram of a battery cell 20 according to some embodiments of this application. The battery 100 includes a box 10 and a battery cell 20, where the battery cell 20 is accommodated in the box 10.

The box 10 is configured to provide an assembly space for the battery cell 20, and the box 10 may be of various structures. In some embodiments, the box 10 may include a first box body 11 and a second box body 12, where the first box body 11 and the second box body 12 engage with each other, and the first box body 11 and the second box body 12 together define an assembly space for accommodating the battery cell 20. The second box body 12 may be a hollow structure with one end open, and the first box body 11 may be a plate-like structure. The first box body 11 covers the open side of the second box body 12, so that the first box body 11 and the second box body 12 together define the assembly space. Alternatively, the first box body 11 and the second box body 12 may both be hollow structures with one open side, and the open side of the first box body 11 covers the open side of the second box body 12.

Certainly, the box 10 formed by the first box body 11 and the second box body 12 may be of various shapes, such as a cylinder or a cuboid. For example, in FIG. 2, the box 10 is a cuboid.

In the battery 100, one or more battery cells 20 may be accommodated in the box 10. When multiple battery cells 20 are accommodated in the box 10, the multiple battery cells 20 may be connected in series, parallel, or series-parallel, where being connected in series-parallel means a combination of series and parallel connections of the multiple battery cells 20. The multiple battery cells 20 may be directly connected in series, parallel, or series-parallel, and then an entirety formed by the multiple battery cells 20 is accommodated in the box 10. Certainly, the battery 100 may be formed by multiple battery cells 20 being connected in series, parallel, or series-parallel first to form a battery module and then multiple battery modules being connected in series, parallel, or series-parallel to form an entirety which is accommodated in the box 10.

In some embodiments, the battery 100 may further include other structures. For example, the battery 100 may further include a busbar component, where the busbar component is configured to connect multiple battery cells 20 to implement electrical connection between the multiple battery cells 20.

Each battery cell 20 may be a secondary battery or a primary battery; or may be a lithium-sulfur battery, a sodium-ion battery, or a magnesium-ion battery, but is not limited thereto. The battery cell 20 may be cylindrical, flat, cuboid, or of other shapes. For example, in FIG. 3, the battery cell 20 is a cuboid structure.

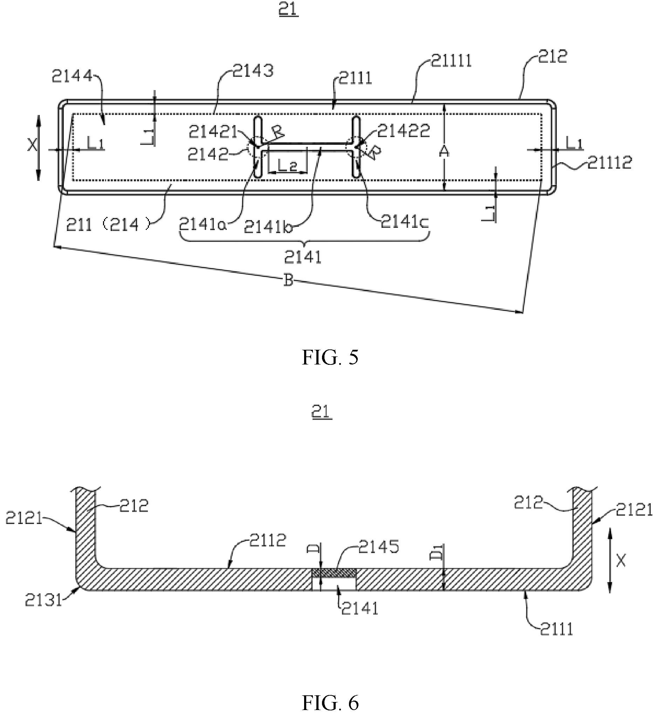

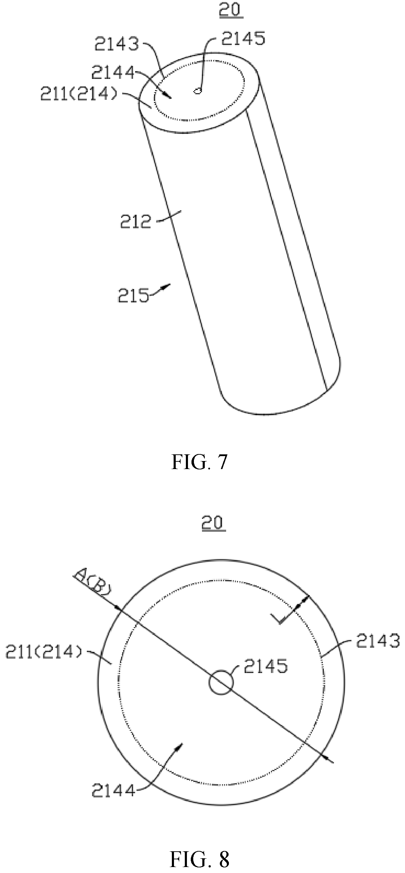

According to some embodiments of this application, refer to FIG. 3, FIG. 4, FIG. 5, FIG. 6, FIG. 7, and FIG. 8. FIG. 4 is an exploded view of a structure of a battery cell 20 according to some embodiments of this application. FIG. 5 is a bottom view of a housing 21 of a battery cell 20 according to some embodiments of this application. FIG. 6 is a partial cross-sectional view of a housing 21 of a battery cell 20 according to some embodiments of this application. FIG. 7 is a schematic structural diagram of a battery cell 20 according to some other embodiments of this application. FIG. 8 is a top view of a housing 21 of a battery cell 20 according to some other embodiments of this application. An embodiment of this application provides a battery cell 20, where the battery cell 20 includes a housing 21 and a pressure relief component 214. The housing 21 has a first wall portion 211, where the first wall portion 211 has a first outer surface 2111 facing away from an interior of the housing 21. The pressure relief component 214 is disposed on the first wall portion 211, where the pressure relief component 214 includes a first weak portion 2145, and the pressure relief component 214 is configured as capable of rupturing along at least a part of the first weak portion 2145 during pressure relief of the battery cell 20. A minimum radial dimension of the first outer surface 2111 is A, a radial direction is a direction passing through a center point of the first outer surface 2111. An outer edge of the first outer surface 2111 is offset toward the center point of the first outer surface 2111 by a predetermined distance L₁ to form a first edge 2143, where L₁ = 0.05*A. Along a thickness direction of the first wall portion 211, a projection of the first weak portion 2145 on the first outer surface 2111 is located within the first edge 2143.

The battery cell 20 is a smallest unit constituting the battery 100.

The housing 21 includes an end cap 216 and a shell 215, where the shell 215 has an opening 2151, and the end cap 216 is connected to the shell 215 and closes the opening 2151.

The end cap 216 is a component that covers the opening 2151 of the shell 215 to isolate the internal environment of the battery cell 20 from the external environment. Without limitation, the shape of the end cap 216 may be adapted to the shape of the shell 215 to match the shell 215. Optionally, the end cap 216 may be made of a material with a certain hardness and strength (for example, aluminum alloy), so that the end cap 216 is less likely to deform when subjected to compression or collision, enabling the battery cell 20 to have higher structural strength and improved safety performance. The end cap 216 may be made of various materials, such as copper, iron, aluminum, stainless steel, aluminum alloy, or plastic, which is not particularly limited in the embodiments of this application. In some embodiments, the battery cell 20 further includes an insulating member, and the insulating member is disposed on an inner side of the end cap 216, and the insulating member may be configured to isolate the electrical connection components inside the shell 215 from the end cap 216 to reduce the risk of short circuits. For example, the insulating member may be plastic, rubber, or the like.

The shell 215 is an assembly configured to cooperate with the end cap 216 to form an internal environment of the battery cell 20, where the formed internal environment can be used to accommodate the electrode assembly 22, an electrolyte, and other components. The shell 215 and the end cap 216 may be independent components, the opening 2151 may be formed in the shell 215, and at the opening 2151, the end cap 216 covers the opening 2151 to form the internal environment of the battery cell 20. Without limitation, the end cap 216 and the shell 215 may be integrally formed. Specifically, the end cap 216 and the shell 215 may form a common joint surface before other components are placed into the shell, and when the interior of the shell 215 needs to be packaged, the end cap 216 covers the shell 215. The shell 215 may be of various shapes and sizes, such as cuboid, cylindrical, or hexagonal prismatic. Specifically, the shape of the shell 215 may be determined based on the specific shape and size of the electrode assembly 22. The shell 215 may be made of various materials, such as copper, iron, aluminum, stainless steel, aluminum alloy, or plastic, which is not particularly limited in the embodiments of this application.

The electrode assembly 22 is a component in the battery cell 20 where electrochemical reactions take place. The housing 21 may contain one or more electrode assemblies 22. The electrode assembly 22 is mainly formed by winding or stacking a positive electrode plate and a negative electrode plate, and a separator film is typically provided between the positive electrode plate and the negative electrode plate. Parts of the positive electrode plate and the negative electrode plate that have active substances constitute a body portion of the electrode assembly 22, while parts of the positive electrode plate and the negative electrode plate that have no active substances constitute respective tabs 221. The positive tab and the negative tab may be both located at one end of the body portion or respectively at two ends of the body portion. During the charge and discharge process of the battery 100, the positive electrode active substance and the negative electrode active substance react with the electrolyte.

In some embodiments, as shown in FIG. 4, the battery cell 20 may further include an electrode terminal 23, where the electrode terminals 23 is insulatedly installed on the housing 21, and the electrode terminals 23 is electrically connected to the electrode assembly 22 to output or input electrical energy of the battery cell 20.

It should be noted that the electrode terminals 23 being insulatedly installed on the housing 21 means that no electrical connection is formed between the electrode terminal 23 and the housing 21.

In FIG. 3 and FIG. 4, the battery cell 20 includes two electrode terminals 23, and the two electrode terminals 23 are spaced apart on the end cap 216. Correspondingly, each electrode assembly 22 has two tabs 221, and the two tabs 221 have opposite polarities. The two electrode terminals 23 are respectively electrically connected to the two tabs 221 of the electrode assembly 22 to implement the input or output of the positive electrode and negative electrode of the battery cell 20.

For example, the electrode terminals 23 may also be made of various materials, such as copper, iron, aluminum, steel, or aluminum alloy.

Optionally, the electrode terminals 23 may be installed on the housing 21 in different structures. For example, in FIG. 3 and FIG. 4, the two electrode terminals 23 are both installed on the end cap 216 of the housing 21. Certainly, the structure of the battery cell 20 is not limited to this. In other embodiments, the two electrode terminals 23 may both be installed on the shell 215 of the housing 21; similarly, one electrode terminal 23 of the two electrode terminals 23 may be installed on the shell 215 of the housing 21, and the other electrode terminal 23 may be installed on the end cap 216 of the housing 21.

In some embodiments, as shown in FIG. 4, the battery cell 20 may further include two current collecting members 24, where the two current collecting members 24 are both disposed within the housing 21, and each current collecting member 24 is configured to connect one electrode terminal 23 and tabs 221 of the same polarity in multiple electrode assemblies 22, to implement electrical connection between the electrode terminal 23 and the electrode assembly 22. This is beneficial to reducing the assembly difficulty between the tabs 221 and the electrode terminals 23.

For example, the current collecting member 24 may also be made of various materials, such as copper, iron, aluminum, steel, or aluminum alloy.

The first wall portion 211 may be the end cap 216 of the housing 21, or may be one wall of the shell 215 of the housing 21. For example, in FIG. 3 and FIG. 4, the first wall portion 211 is a bottom wall of the shell 215 disposed opposite the end cap 216. In other embodiments, the first wall portion 211 may alternatively be a side wall of the shell 215 adjacent to and connected to the end cap 216.

The first outer surface 2111 is a surface of the first wall portion 211 facing away from the interior of the housing 21, and the first outer surface 2111 is a flat surface. For example, when the first wall portion 211 is a cuboid structure, the first outer surface 2111 is a rectangular surface of the first wall portion 211 facing away from the interior of the housing 21. For another example, when the first wall portion 211 is a disc structure, the first outer surface 2111 is a circular surface of the first wall portion 211 facing away from the interior of the housing 21.

In some embodiments, the housing 21 includes a second wall portion 212 adjacent to the first wall portion 211, where the second wall portion 212 has a second outer surface 2121 facing away from the interior of the housing 21. The first outer surface 2111 may be directly connected to the second outer surface 2121, in which case the connection position of the first outer surface 2111 and the second outer surface 2121 forms a sharp edge. Alternatively, the first outer surface 2111 may be connected to the second outer surface 2121 through an arc transition surface 2131, in which case the first outer surface 2111 and the second outer surface 2121 are in a rounded transition.

The pressure relief component 214 may be a component installed on the first wall portion 211. In this case, the pressure relief component 214 is separately formed from and connected to the first wall portion 211. For example, the pressure relief component 214 may be an explosion-proof sheet installed on the first wall portion 211. The pressure relief component 214 may alternatively be a part of the first wall portion 211. In this case, the pressure relief component 214 is integrally formed with the first wall portion 211. Which wall of the housing 21 is the first wall portion 211 can be determined based on the position of the pressure relief component 214. For example, when the pressure relief component 214 is disposed on the end cap 216, the end cap 216 is the first wall portion 211. When the pressure relief component 214 is disposed on the bottom wall of the shell 215, the bottom wall is the first wall portion 211. When the pressure relief component 214 is disposed on a side wall of the shell 215, the side wall is the first wall portion 211.

The first weak portion 2145 serves to relieve pressure, configured to cause the pressure relief component 214 to rupture along the first weak portion 2145 when internal pressure or temperature of the battery cell 20 reaches a predetermined value, to release the internal pressure of the battery cell 20. In some embodiments, a strength of the pressure relief component 214 at a position of the first weak portion 2145 may be lower than a strength of the pressure relief component 214 at other positions, so that when the internal pressure or temperature of the battery cell 20 reaches the predetermined value, the first weak portion 2145 can rupture under the internal pressure to release the internal pressure of the battery cell 20. In some other embodiments, a melting point of the pressure relief component 214 at the position of the first weak portion 2145 may be lower than a melting point of the pressure relief component 214 at other positions, so that when the internal pressure or temperature of the battery cell 20 reaches the predetermined value, the first weak portion 2145 can rupture under high temperature to release the internal pressure of the battery cell 20. Referring to FIG. 6, to facilitate display of the position of the first weak portion 2145, the cross-section of the first weak portion 2145 is shown with a mesh-like fill pattern in FIG. 6.

A represents a minimum radial dimension of the first outer surface 2111. The "minimum radial dimension of the first outer surface 2111" refers to a dimension of the shortest straight line segment among multiple straight line segments using any two points on the outer edge of the first outer surface 2111 as endpoints and passing through the center point of the first outer surface 2111. Referring to FIG. 5 and FIG. 6, in the embodiments shown in FIG. 5 and FIG. 6, the first outer surface 2111 is a rectangular structure, and the minimum radial dimension of the first outer surface 2111 is the width of the rectangle. Referring to FIG. 7 and FIG. 8, in the embodiments shown in FIG. 7 and FIG. 8, the first outer surface 2111 is a circular structure, and the minimum radial dimension of the first outer surface 2111 is the diameter of the circular surface. For another example, in some embodiments, if the first outer surface 2111 is a regular hexagon, the minimum radial dimension of the first outer surface 2111 is the distance between two parallel sides of the hexagon.

The first edge 2143 is formed by offsetting the outer edge of the first outer surface 2111 toward the center point of the first outer surface 2111 by a predetermined distance L₁. Taking the first outer surface 2111 being a rectangular structure as an example, the first edge 2143 is formed by translating the two long sides and two short sides of the first outer surface 2111 toward the intersection point of the diagonals of the rectangle by the predetermined distance L₁. Taking the first outer surface 2111 being a circular structure as an example, the first edge 2143 is formed by translating the circumferential surface of the first outer surface 2111 toward the center by the predetermined distance L₁.

L₁ = 0.05*A, meaning that the predetermined distance L₁ is 0.05 times the minimum radial dimension of the first outer surface 2111.

Referring to FIG. 5 and FIG. 6, the thickness direction of the first wall portion 211 is a direction X shown in the figures.

"Along a thickness direction of the first wall portion 211, a projection of the first weak portion 2145 on the first outer surface 2111 is located within the first edge 2143" can also be understood as: a region of the first wall portion 211 within the first edge 2143 is the first region 2144, and the first weak portion 2145 is disposed in the first region 2144.

The outer edge of the first outer surface 2111 is offset toward the center point of the first outer surface 2111 by 0.05A to form the first edge 2143, and the first edge 2143 defines a first region 2144 on the first wall portion 211. The first region 2144 is close to the center of the wall portion, and the first region 2144 is a region with relatively small stiffness, and its ability to resist deformation is relatively weak. When the battery cell 20 releases internal pressure, the first region 2144 undergoes significant deformation under the action of gas, causing the first weak portion 2145 disposed in the first region 2144 to easily deform and rupture. Therefore, under the same burst pressure, the thickness of the first weak portion 2145 disposed in the first region 2144 can be greater. As a result, during normal use of the battery cell 20, the first weak portion 2145 is less likely to rupture prematurely due to pressure changes inside the battery cell 20 or external impacts, reducing the risk of premature rupture of the first weak portion 2145 and enhancing the lifespan of the battery cell 20. Furthermore, a greater thickness of the first weak portion 2145 makes manufacturing easier, lowering a precision requirement for manufacturing equipment.

Referring to FIG. 7 and FIG. 8, in some embodiments, the housing 21 is a cylindrical structure. The housing 21 includes a second wall portion 212, and the second wall portion 212 surrounds the first wall portion 211. The first outer surface 2111 is a circular structure, and the minimum radial dimension of the first outer surface 2111 is a diameter of the circular surface.

The housing 21 is a cylindrical structure, and the second wall portion 212 surrounds the first wall portion 211, so the second wall portion 212 is a peripheral wall of the shell 215, and the first wall portion 211 is connected to one end of the second wall portion 212. The first wall portion 211 may be the end cap 216 or the bottom wall of the shell 215, where the bottom wall and the end cap 216 are disposed opposite each other at two ends of the second wall portion 212.

The first outer surface 2111 is a circular structure, the minimum radial dimension of the first outer surface 2111 is the diameter of the circular surface, and the first edge 2143 is a circle with a diameter of 0.9A.

Referring again to FIG. 5 and FIG. 6, in some embodiments, the housing 21 is a prismatic structure, the first outer surface 2111 is a rectangular structure, and the first outer surface 2111 includes two first long sides 21111 and two first short sides 21112, where the two first long sides 21111 are disposed opposite each other along a width direction of the first wall portion 211, and the two first short sides 21112 are disposed opposite each other along a length direction of the first wall portion 211. The two first long sides 21111 and the two first short sides 21112 are offset toward the center point of the first outer surface 2111 by the predetermined distance L₁ to form the first edge 2143.

The housing 21 is a prismatic structure. Referring to FIG. 5 and FIG. 6, in the embodiments shown in FIG. 5 and FIG. 6, the housing 21 is a quadrangular prism structure, that is, a cuboid structure.

The first outer surface 2111 is a rectangular structure, and the first outer surface 2111 includes two first long sides 21111 and two first short sides 21112. The first long sides 21111 and the first short sides 21112 may be directly connected, in which case the first long side 21111 and the second short side 21112 form a sharp edge. The first long sides 21111 and the first short sides 21112 may alternatively be connected through an arc segment.

When the first long sides 21111 and the first short sides 21112 are directly connected, the two first long sides 21111 and the two first short sides 21112 are offset toward the center point of the first outer surface 2111 by the predetermined distance L₁ to form the first edge 2143.

When the first long sides 21111 and the first short sides 21112 are connected through an arc segment and the predetermined distance L₁ is greater than or equal to the radius of the arc segment, the two first long sides 21111 and the two first short sides 21112 are offset toward the center point of the first outer surface 2111 by the predetermined distance L₁ to form the first edge 2143 (since the predetermined distance is greater than or equal to the radius of the arc segment, no arc segment is needed after the offset to form a closed first edge 2143).

When the first long sides 21111 and the first short sides 21112 are connected through an arc segment and the predetermined distance L₁ is less than the radius of the arc segment, the two first long sides 21111 and the two first short sides 21112 are offset toward the center point of the first outer surface 2111 by the predetermined distance L₁, and the arc segment is also offset toward its corresponding center by the predetermined distance L₁ to connect the offset first long sides 21111 and first short sides 21112, thereby forming the first edge 2143.

The first edge 2143 is a rectangular structure, the long sides of the first edge 2143 are formed by offsetting the two first long sides 21111 of the first outer surface 2111 toward the center point of the first outer surface 2111, and the short sides of the first edge 2143 are formed by offsetting the two first short sides 21112 of the first outer surface 2111 toward the center point of the first outer surface 2111.

Referring to FIG. 5 and FIG. 6, in some embodiments, the first weak portion 2145 includes at least one priority burst region 2142, where the priority burst region 2142 ruptures earlier than other regions of the first weak portion 2145 during pressure relief of the battery cell 20. A minimum distance between a projection of the priority burst region 2142 on the first outer surface 2111 along the thickness direction of the first wall portion 211 and the center point of the first outer surface 2111 is L₂, and a minimum thickness of the priority burst region 2142 is D, satisfying: 5 mm ≤ L₂ ≤ 40 mm, and 0.05 mm ≤ D ≤ 0.6 mm.

The priority burst region 2142 is a region of the first weak portion 2145 that bursts preferentially during pressure relief of the battery cell 20. The priority burst region 2142 ruptures earlier than other regions of the first weak portion 2145 during pressure relief of the battery cell 20.

L₂ represents the minimum distance between the projection of the priority burst region 2142 on the first outer surface 2111 along the thickness direction of the first wall portion 211 and the center point of the first outer surface 2111. The position of the priority burst region 2142 can be determined through thermal runaway experiments, and the horizontal distance between the priority burst region 2142 and the center point of the first outer surface 2111 can be measured.

A value of the minimum distance between the projection of the priority burst region 2142 on the first outer surface 2111 along the thickness direction of the first wall portion 211 and the center point of the first outer surface 2111 may be: L₂ = 5 mm, 8 mm, 10 mm, 12 mm, 15 mm, 18 mm, 20 mm, 25 mm, 30 mm, 35 mm, 40 mm, or the like.

D represents the minimum thickness of the priority burst region 2142. The position of the priority burst region 2142 can be determined through thermal runaway experiments, and then the minimum thickness of the priority burst region 2142 can be measured. Alternatively, the minimum thickness of the priority burst region 2142 can be measured through cross-sectional scanning. It should be noted that the minimum thickness of the priority burst region 2142 may be greater than the minimum thickness of other regions of the first weak portion 2145, may be equal to the minimum thickness of other regions of the first weak portion 2145, or may be less than the minimum thickness of other regions of the first weak portion 2145. In the embodiments shown in FIG. 5 and FIG. 6, the minimum thickness of the priority burst region 2142 is equal to the minimum thickness of other regions of the first weak portion 2145.

A value of the minimum thickness of the priority burst region 2142 may be: D = 0.05 mm, 0.08 mm, 0.1 mm, 0.2 mm, 0.3 mm, 0.4 mm, 0.5 mm, 0.6 mm, or the like.

To describe the technical problems solved by the embodiments of this application, technical solutions, and beneficial effects more clearly, the following provides further descriptions with reference to Comparative Examples 1 and 2 and Examples 1 to 7. Apparently, the described embodiments are some but not all of the embodiments of this application. The following description of at least one example embodiment is merely illustrative and definitely is not construed as any limitation on this application or on use of this application. All other embodiments obtained by a person of ordinary skill in the art based on the embodiments of this application without creative efforts shall fall within the protection scope of this application.

### Example 1

The battery cells 20 in all examples and comparative examples were prepared and tested according to the following methods.

### I. Preparation of battery cell 20

### (1) Preparation of positive electrode plate

The positive electrode active material LiNi_{0.7}Co_{0.1}Mn_{0.1}O₂, conductive agent Super P, and binder polyvinylidene fluoride (PVDF) were mixed in N-methylpyrrolidone (NMP) to produce a positive electrode slurry, where the solid content of the positive electrode slurry was 50wt%, and the mass ratio of LiNi_{0.7}Co_{0.1}Mn_{0.1}O₂, Super P, and PVDF in the solid components was 8:1:1. The positive electrode slurry was applied onto the upper and lower surfaces of the aluminum foil current collector which was then dried at 85°C, cold-pressed, cut, slit, and then dried under vacuum at 85°C for 4 hours to make a positive electrode plate.

### (2) Preparation of negative electrode plate

Graphite, conductive agent Super P, thickener carboxymethyl cellulose (CMC), and binder styrene-butadiene rubber (SBR) were mixed to uniformity in deionized water to produce a negative electrode slurry, where the solid content of the negative electrode slurry was 30wt%, and the mass ratio of graphite, silicon oxide, Super P, CMC, and SBR in the solid components was 88:7:3:2. The negative electrode slurry was applied onto the upper and lower surfaces of the copper foil current collector which was then dried at 85°C, cold-pressed, cut, slit, and then dried under vacuum at 120°C for 12 hours to make a negative electrode plate.

### (3) Preparation of electrolyte

In an argon atmosphere glovebox (H₂O < 0.1 ppm, O₂ < 0.1 ppm), the thoroughly dried electrolyte salt LiPF₆ was dissolved in a mixed solvent (the mixed solvent included ethylene carbonate (EC) and diethyl carbonate (DEC), and the ethylene carbonate (EC) and diethyl carbonate (DEC) were mixed in a mass ratio of 50:50), and mixed to uniformity to obtain a liquid electrolyte with a concentration of 1 mol/L.

### (4) Separator

A 16 µm polyethylene film was used as the separator.

### (5) Preparation of battery cell 20

The positive electrode plate, separator, and negative electrode plate were stacked in order, with the separator placed between the positive and negative electrode plates to separate the positive and negative electrodes. The resulting stack was wound to obtain an electrode assembly 22. The electrode assembly 22 was placed in an aluminum housing 21, the prepared electrolyte was injected into the dried housing 21, and processes such as packaging, standing, formation, shaping, and capacity testing were performed to complete the preparation of the battery cell 20. A first weak portion 2145 was formed on the first wall portion 211 of the housing 21 of the battery cell 20. In Example 1, the housing 21 of the battery cell 20 is a cuboid structure, the shell 215 of the housing 21 is a structure with an opening 2151 at one end, the wall of the shell 215 opposite the end cap 216 is the first wall portion 211, the first wall portion 211 is a rectangular wall, a first groove 2141 is provided on the first wall portion 211, and the first wall portion 211 has the first weak portion 2145 formed in the region where the first groove 2141 is provided. The first groove 2141 is an "H"-shaped structure, that is, the first groove 2141 includes a first groove segment 2141a, a second groove segment 2141b, and a third groove segment 2141c, where the first groove segment 2141a and the third groove segment 2141c are disposed opposite each other and both extend along the width direction of the first wall portion 211, the second groove segment 2141b is connected between the first groove segment 2141a and the third groove segment 2141c, and the second groove segment 2141b is located in the middle of the first wall portion 211 in the width direction of the first wall portion 211. The centerline of the bottom surface of the first groove segment 2141a intersects with the centerline of the bottom surface of the second groove segment 2141b at a first intersection point 21421, the extension direction of the centerline of the bottom surface of the first groove segment 2141a is parallel to the extension direction of the first groove segment 2141a, and the extension direction of the centerline of the bottom surface of the second groove segment 2141b is parallel to the extension direction of the second groove segment 2141b. A region of the first weak portion 2145 within a range with a radius R and centered at the first intersection point 21421 is the priority burst region 2142, where A > R = 5 mm. The battery cell 20 has a thickness of 39 mm, a width of 203 mm, a shoulder height (the dimension of the housing 21 in the height direction) of 122.7 mm, and a capacity of 185 Ah.

The minimum distance L₂ between the projection of the priority burst region 2142 on the first outer surface 2111 along the thickness direction of the first wall portion 211 and the center point of the first outer surface 2111, and the minimum thickness D of the priority burst region 2142, were both obtained through cross-sectional scanning and measured using software.

The preparation methods for the battery cells 20 in Comparative Examples 1 and 2 and Examples 2 to 7 are the same as that in Example 1, with the difference lying in the minimum distance L₂ between the projection of the priority burst region 2142 on the first outer surface 2111 along the thickness direction of the first wall portion 211 and the center point of the first outer surface 2111, and the minimum thickness D of the priority burst region 2142. Specific details are shown in Table 1.

### II. Performance parameter testing

### 1. Measurement method for cycle fatigue count of battery cell 20

(1) A dedicated test fixture was prepared. Specifically, the fixture includes three 10 mm steel plates (a first steel plate, a second steel plate, and a third steel plate), each steel plate capable of covering the entire large surface of the battery cell 20. The first steel plate and the third steel plate are located at two ends of the fixture and are connected and fixed by bolts. The second steel plate is located between the first steel plate and the third steel plate, and the second steel plate is constrained by guide rails, allowing the second steel plate to move only in the thickness direction of the second steel plate.
(2) The battery cell 20 was installed between the first steel plate and the second steel plate, and a support structure was placed between the two large surfaces of the battery cell 20 and the first and second steel plates. The support structure may be an insulating pad or a water-cooling plate (consistent with the material/structure between two adjacent battery cells 20 in an actual battery 100). The support structure can be compressed to provide a swelling space for the battery cell 20 in the aging process during the charge-discharge cycle. The two large surfaces of the battery cell 20 are in contact with the support structure, the first steel plate is in contact with its corresponding support structure, the second steel plate is in contact with its corresponding support structure, and a pressure sensor is disposed between the second and third steel plates.
(3) The position of the second steel plate was adjusted by adjusting the pre-tightening force of the bolts, the pressure sensor was monitored to ensure an initial compressive force of 2000 N was applied to the battery cell 20, and the positive electrode terminal and negative electrode terminal of the battery cell 20 was connected to the charge-discharge device.
(4) The battery cell 20 and the fixture were placed in a constant temperature environment of 25±2°C, allowing the battery cell 20 to reach temperature equilibrium before the test.
(5) The test steps were performed by referring to Section 6.4 "Standard Cycle Life" of GB/T 31484-2015 "Cycle life requirements and test methods for traction batteries 100 for electric vehicles", with the test termination condition modified to "the test stops when the first weak portion 2145 on the first wall portion 211 was damaged."

Specifically, the test is conducted according to the following steps:
(a) discharge at a current of 1I₁ (A) to 2.8 V;
(b) rest for at least 30 minutes or as specified by the manufacturer;
(c) charge according to the method in Section 6.1.1.3 of GB/T 31484-2015 "Cycle life requirements and test methods for traction batteries 100 for electric vehicles";
(d) rest for at least 30 minutes or as specified by the manufacturer;
(e) discharge at a current of 1I₁ (A) to 2.8 V; and
(f) repeat steps (b) to (e), and stop the test when a region where the first groove 2141 is disposed on the first wall portion 211 is damaged.

To be specific, during the test, the region of the first wall portion 211 where the first groove 2141 is disposed was continuously monitored until the region suffered from damage and leakage, and the number of cycles at that time was recorded as the cycle fatigue count of the battery cell 20. A higher cycle fatigue count indicates a lower probability of the battery cell 20 experiencing valve opening and leakage due to gas generation during long-term use, resulting in a longer lifespan.

### 2. Thermal runaway test method for battery cell 20

(1) A heating plate was selected based on the size of the battery cell 20, ensuring the heating plate covers the two large surfaces of the battery cell 20 (coverage area ≥ 60%).
(2) Before testing, the battery cell 20 was charged to 100%SOC, ensuring the temperature of the battery cell 20 was 25±5°C.
(3) Sensor arrangement:
   (a) temperature sensor arrangement: A layer of Teflon was attached to the central region of each of the two large surfaces of the battery cell 20, and a temperature sensor was arranged on the Teflon, followed by another layer of Teflon;
   (b) voltage sampling line arrangement: A layer of Teflon was attached to each of the positive electrode terminal, negative electrode terminal, and housing 21 of the battery cell 20, and voltage sampling lines were arranged on the Teflon, followed by another layer of Teflon;
   (c) gas pipe arrangement: A hole was drilled in the first wall portion 211 of the battery cell 20, with the hole located at the midpoint between the first groove 2141 and the side surface of the shell 215 (that is, the outer surface of the wall portion of the shell 215 adjacent to the first wall portion 211 along the length direction of the first wall portion 211) along the length direction of the first wall portion 211. A gas pipe was inserted into the hole and sealed, and the gas pipe was connected to the pressure sensor; and
   (d) the temperature sensor, voltage sampling lines, and pressure sensor were connected to a data acquisition device to collect and analyze data in real time, with a data acquisition frequency of the data acquisition device set to be ≤ 0.1s.
(4) Fixture assembly: The fixture fully covers the two large surfaces of the battery cell 20 with a clamping force of 3000 N. The fixture, the heating plate, and the battery cell 20 were arranged in the following order: fixture + heating plate + battery cell 20 + fixture.
(5) Test: The temperature, voltage, and pressure data was collected from multiple channels, and then the heating plate was activated at 500 W to heat the battery cell 20 until the battery cell 20 experienced thermal runaway.
(6) Acquisition of pressure suppression duration of the battery cell 20: The thermal runaway moment and the valve opening moment were determined based on the collected temperature, voltage, and pressure data, and the pressure suppression duration was calculated according to: pressure suppression duration = valve opening moment - thermal runaway moment.

Thermal runaway criteria: (a) The test object experiences a voltage drop exceeding 25% of the initial voltage. (b) The temperature at the detection point reaches the maximum operating temperature specified by the manufacturer. (c) The temperature rise rate dT/dt of the detection point is greater than or equal to 1°C/s and lasts for more than 3 seconds. When (a) and (c) or (b) and (c) occur, it is determined that thermal runaway has occurred, and the thermal runaway moment is recorded.

Determination of valve opening moment: When the pressure decreases by more than 25%, it is determined that the valve has opened (the first wall portion 211 has ruptured along the first groove 2141), and the moment when the pressure begins to drop is the valve opening moment.

### III. Test results

The experimental results for Comparative Examples 1 and 2 and Examples 1 to 7 are shown in Table 1 below.

**Table 1**

| No. | D (mm) | L₂ (mm) | Cycle fatigue count of battery cell 20 | Pressure suppression duration of battery cell 20 (s) |
|---|---|---|---|---|
| Comparative Example 1 | 0.04 | 4 | 129 | 0.9 |
| Comparative Example 2 | 0.7 | 42 | 3509 | 3.4 |
| Example 1 | 0.05 | 20 | 1190 | 1.4 |
| Example 2 | 0.1 | 20 | 1509 | 1.7 |
| Example 3 | 0.3 | 10 | 1813 | 1.8 |
| Example 4 | 0.4 | 5 | 2109 | 2.1 |
| Example 5 | 0.5 | 30 | 2783 | 2.5 |
| Example 6 | 0.6 | 30 | 2913 | 2.8 |
| Example 7 | 0.5 | 40 | 2849 | 2.9 |

Referring to Table 1, as shown in Comparative Example 1, when L₂ is less than 5 mm and D is less than 0.05 mm, the cycle fatigue count of the battery cell 20 is small, and the priority burst region 2142 is susceptible to internal pressure changes in the battery cell 20, causing the pressure relief component 214 to rupture prematurely along the priority burst region 2142, resulting in a short lifespan of the battery cell 20.

Referring to Table 1, as shown in Comparative Example 2, when L₂ is greater than 40 mm and D is greater than 0.6 mm, the pressure suppression duration of the battery cell 20 during thermal runaway is long, indicating poor pressure relief timeliness of the battery cell 20 during thermal runaway.

Referring to Table 1, as shown in Examples 1 to 7, when 5 mm ≤ L₂ ≤ 40 mm and 0.05 mm ≤ D ≤ 0.6 mm, the pressure suppression duration of the battery cell 20 during thermal runaway is short, indicating good pressure relief timeliness of the battery cell 20 during thermal runaway. In addition, the cycle fatigue count of the battery cell 20 is large, and the priority burst region 2142 is less susceptible to internal pressure changes in the battery cell 20 and is less likely cause the pressure relief component 214 to rupture prematurely along the priority burst region 2142, resulting in a longer lifespan of the battery cell 20.

The first weak portion 2145 has a priority burst region 2142, and during pressure relief of the battery cell 20, the priority burst region 2142 ruptures first, and then other regions of the first weak portion 2145 gradually rupture along the extension direction of the first weak portion 2145. When D is greater than or equal to 0.05 mm, the minimum thickness of the priority burst region 2142 is relatively large, making the priority burst region 2142 less likely to rupture prematurely due to pressure changes inside the battery cell 20 or external impacts, which is beneficial to enhancing the lifespan of the battery cell 20. When D is less than or equal to 0.6 mm, the minimum thickness of the priority burst region 2142 is not excessively large, enabling the priority burst region 2142 to rupture promptly during pressure relief of the battery cell 20, which is beneficial to improving the timeliness of pressure relief of the battery cell 20. Therefore, when 0.05 mm ≤ D ≤ 0.6 mm, the priority burst region 2142 is less likely to rupture due to pressure changes inside the battery cell 20 or external impacts, and the priority burst region 2142 can also rupture promptly, which is beneficial to improving the timeliness of pressure relief of the battery cell 20. When L₂ is greater than or equal to 5 mm, the minimum distance between the projection of the priority burst region 2142 on the first outer surface 2111 along the thickness direction of the first wall portion 211 and the center point of the first outer surface 2111 is relatively large, and the stiffness at the position of the priority burst region 2142 is higher, making the priority burst region 2142 less likely to rupture prematurely due to pressure changes inside the battery cell 20 or external impacts during normal use of the battery cell 20, reducing the risk of premature rupture of the priority burst region 2142. When L₂ is less than or equal to 40 mm, the minimum distance between the projection of the priority burst region 2142 on the first outer surface 2111 along the thickness direction of the first wall portion 211 and the center point of the first outer surface 2111 is not excessively large, which allows the priority burst region 2142 to undergo significant deformation under the action of gas during pressure relief of the battery cell 20, enabling the priority burst region 2142 to rupture promptly, thereby improving the timeliness of pressure relief of the battery cell 20. Therefore, when 5 mm ≤ L₂ ≤ 40 mm, the priority burst region 2142 is less likely to rupture due to pressure changes inside the battery cell 20 or external impacts, and the priority burst region 2142 can also rupture promptly, which is beneficial to improving the timeliness of pressure relief of the battery cell 20.

Optionally, 0.1 mm ≤ D ≤ 0.5 mm.

A value of the minimum thickness of the priority burst region 2142 may be: D = 0.1 mm, 0.15 mm, 0.2 mm, 0.25 mm, 0.3 mm, 0.35 mm, 0.4 mm, 0.45 mm, 0.5 mm, or the like.

When D is greater than or equal to 0.1 mm, the risk of the priority burst region 2142 rupturing due to pressure changes inside the battery cell 20 or external impacts is further reduced, which is beneficial to enhancing the lifespan of the battery cell 20. When D is less than or equal to 0.5 mm, the priority burst region 2142 can rupture more promptly during pressure relief of the battery cell 20, which is beneficial to improving the timeliness of pressure relief of the battery cell 20. Therefore, when 0.1 mm ≤ D ≤ 0.5 mm, the priority burst region 2142 is even less likely to rupture due to pressure changes inside the battery cell 20 or external impacts, and the priority burst region 2142 can rupture more promptly during pressure relief of the battery cell 20, which is beneficial to improving the timeliness of pressure relief of the battery cell 20.

Optionally, 10 mm ≤ L₂ ≤ 30 mm.

A value of the minimum distance between the projection of the priority burst region 2142 on the first outer surface 2111 along the thickness direction of the first wall portion 211 and the center point of the first outer surface 2111 may be: L₂ = 10 mm, 11 mm, 12 mm, 13 mm, 14 mm, 15 mm, 16 mm, 17 mm, 18 mm, 19 mm, 20 mm, 21 mm, 22 mm, 23 mm, 24 mm, 25 mm, 26 mm, 27 mm, 28 mm, 29 mm, 30 mm, or the like.

When L₂ is greater than or equal to 10 mm, the stiffness at the position of the priority burst region 2142 is higher, making the priority burst region 2142 even less likely to rupture prematurely due to pressure changes inside the battery cell 20 or external impacts, reducing the risk of premature rupture of the priority burst region 2142. When L₂ is less than or equal to 30 mm, the priority burst region 2142 undergoes significant deformation under the action of gas during pressure relief of the battery cell 20, enabling the priority burst region 2142 to rupture more promptly, which is beneficial to improving the timeliness of pressure relief of the battery cell 20. Therefore, when 10 mm ≤ L₂ ≤ 30 mm, the priority burst region 2142 is less likely to rupture due to pressure changes inside the battery cell 20 or external impacts, and the priority burst region 2142 can also rupture promptly, which is beneficial to improving the timeliness of pressure relief of the battery cell 20.

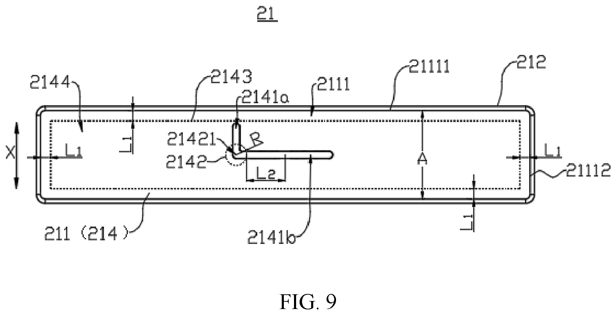

Referring to FIG. 9, FIG. 9 is a bottom view of a housing 21 of a battery cell 20 according to still some other embodiments of this application. In some embodiments, the pressure relief component 214 is provided with a first groove 2141, and the pressure relief component 214 has the first weak portion 2145 formed in a region where the first groove 2141 is provided. The first groove 2141 includes a first groove segment 2141a and a second groove segment 2141b, where the first groove segment 2141a and the second groove segment 2141b are connected. A centerline of a bottom surface of the first groove segment 2141a intersects with a centerline of a bottom surface of the second groove segment 2141b at a first intersection point 21421. An extension direction of the centerline of the bottom surface of the first groove segment 2141a is parallel to the extension direction of the first groove segment 2141a, and an extension direction of the centerline of the bottom surface of the second groove segment 2141b is parallel to the extension direction of the second groove segment 2141b. A region of the first weak portion 2145 within a range with a radius R and centered at the first intersection point 21421 is the priority burst region 2142, where A > R = 5 mm.

Along the thickness direction of the first wall portion 211, the first wall portion 211 has a first outer surface 2111 and a first inner surface 2112 disposed opposite each other, where the first outer surface 2111 faces away from the interior of the housing 21, and the first inner surface 2112 faces the interior of the housing 21. The first groove 2141 may be disposed on the first outer surface 2111, or may be disposed on the first inner surface 2112. Referring to FIG. 5 and FIG. 6, in the embodiments shown in the figures, the first groove 2141 is disposed on the first outer surface 2111.

The pressure relief component 214 has the first weak portion 2145 formed in the region where the first groove 2141 is provided, which can also be understood as the bottom wall of the first groove 2141 forming the first weak portion 2145. Referring to FIG. 5 and FIG. 6, in the embodiments shown in the figures, along the thickness direction of the first wall portion 211, the first weak portion 2145 is a portion of the pressure relief component 214 between the bottom surface of the first groove 2141 farthest from the first outer surface 2111 and the first inner surface 2112.

The first groove 2141 can be formed using various methods, such as stamping or cold heading. Forming the first groove 2141 by stamping or cold heading causes cold work hardening of the groove walls of the first groove 2141 (changes in grain arrangement lead to lattice distortion, reducing metal plasticity and increasing material hardness) As a result, the groove walls have enhanced resistance to external impacts and are less likely to be damaged by external impacts. This is beneficial to reducing the risk of liquid leakage in the pressure relief component 214.

The first groove 2141 includes a first groove segment 2141a and a second groove segment 2141b, where the first groove segment 2141a and the second groove segment 2141b are connected. For example, in FIG. 9, one end of the first groove segment 2141a is connected to one end of the second groove segment 2141b, and both the first groove segment 2141a and the second groove segment 2141b are straight groove segments, so that the first groove segment 2141a and the second groove segment 2141b form an "L"-shaped first groove 2141. Certainly, in other embodiments, one end of the first groove segment 2141a may alternatively be connected to a middle position of the second groove segment 2141b.

The centerline of the bottom surface of the first groove segment 2141a is located at the middle of the bottom surface of the first groove segment 2141a in the width direction of the first groove segment 2141a. The extension direction of the centerline of the bottom surface of the first groove segment 2141a is parallel to the extension direction of the first groove segment 2141a.

The centerline of the bottom surface of the second groove segment 2141b is located at the middle of the bottom surface of the second groove segment 2141b in the width direction of the second groove segment 2141b. The extension direction of the centerline of the bottom surface of the second groove segment 2141b is parallel to the extension direction of the second groove segment 2141b.

The first intersection point 21421 is an intersection point of the centerline of the bottom surface of the first groove segment 2141a and the centerline of the bottom surface of the second groove segment 2141b. A region of the first weak portion 2145 within a range with a radius of 5 mm and centered at the first intersection point 21421 is the priority burst region 2142.

It should be noted that the minimum radial dimension of the first outer surface 2111 is greater than 5 mm.

The stress at the intersection position of the first groove segment 2141a and the second groove segment 2141b is more concentrated, and a region of the first weak portion 2145 within a range with a radius of 5 mm and centered at the first intersection point 21421 is the priority burst region 2142. During pressure relief of the battery cell 20, the priority burst region 2142 ruptures first, and then the first groove segment 2141a and the second groove segment 2141b gradually rupture along their extension directions, thereby implementing rapid pressure relief of the battery cell 20.

Referring again to FIG. 5 and FIG. 6, the first groove 2141 includes a third groove segment 2141c, where the first groove segment 2141a and the third groove segment 2141c are disposed opposite each other, and the second groove segment 2141b connects the first groove segment 2141a and the third groove segment 2141c. The centerline of the bottom surface of the second groove segment 2141b intersects with a centerline of a bottom surface of the third groove segment 2141c at a second intersection point 21422, and an extension direction of the centerline of the bottom surface of the third groove segment 2141c is parallel to an extension direction of the third groove segment 2141c. A region of the first weak portion 2145 within a range with a radius R and centered at the second intersection point 21422 is the priority burst region 2142.

The first groove segment 2141a and the third groove segment 2141c are spaced apart and at least partially opposite each other. The second groove segment 2141b connects the first groove segment 2141a and the third groove segment 2141c, meaning that the second groove segment 2141b is located between the first groove segment 2141a and the third groove segment 2141c, with two ends of the second groove segment 2141b respectively connected to the first groove segment 2141a and the third groove segment 2141c. Certainly, in other embodiments, two ends of the second groove segment 2141b may respectively extend beyond the first groove segment 2141a and the third groove segment 2141c.

Referring to FIG. 5 and FIG. 6, in the embodiments shown in the figures, the connection position of the second groove segment 2141b and the first groove segment 2141a is offset from both ends of the first groove segment 2141a, meaning that the second groove segment 2141b is connected between the two ends of the first groove segment 2141a. Similarly, the connection position of the second groove segment 2141b and the third groove segment 2141c is offset from both ends of the third groove segment 2141c, meaning that the second groove segment 2141b is connected between the two ends of the third groove segment 2141c. In this way, the first groove 2141 formed by the first groove segment 2141a, the second groove segment 2141b, and the third groove segment 2141c has a shape resembling an "H".

The centerline of the bottom surface of the third groove segment 2141c is located at the middle of the bottom surface of the third groove segment 2141c in the width direction of the third groove segment 2141c. The extension direction of the centerline of the bottom surface of the third groove segment 2141c is parallel to the extension direction of the third groove segment 2141c.

The second intersection point 21422 is an intersection point of the centerline of the bottom surface of the second groove segment 2141b and the centerline of the bottom surface of the third groove segment 2141c. A region of the first weak portion 2145 within a range with a radius of 5 mm and centered at the second intersection point 21422 is the priority burst region 2142.

Referring to FIG. 5, in the embodiment shown in FIG. 5, the first weak portion 2145 includes two priority burst regions 2142. A region of the first weak portion 2145 within a range with a radius of 5 mm and centered at the first intersection point 21421 is one priority burst region 2142, and a region of the first weak portion 2145 within a range with a radius of 5 mm and centered at the second intersection point 21422 is another priority burst region 2142. The two priority burst regions 2142 are spaced apart, meaning that in the embodiment shown in FIG. 5, a distance between the first intersection point 21421 and the second intersection point 21422 is greater than 10 mm.

The stress at the intersection position of the second groove segment 2141b and the third groove segment 2141c is more concentrated, and a region of the first weak portion 2145 within a range with a radius of 5 mm and centered at the second intersection point 21422 is also a priority burst region 2142. During pressure relief of the battery cell 20, the two priority burst regions 2142 rupture first, and then the first groove segment 2141a, the second groove segment 2141b, and the third groove segment 2141c gradually rupture along their extension directions, thereby implementing rapid pressure relief of the battery cell 20.

Referring to FIG. 5, FIG. 6, FIG. 7, and FIG. 8, in some embodiments, a maximum radial dimension of the first outer surface 2111 is B, satisfying: B ≥ A ≥ 10 mm.

B represents a maximum radial dimension of the first outer surface 2111. The "maximum radial dimension of the first outer surface 2111" refers to a dimension of the longest straight line segment among multiple straight line segments using any two points on the outer edge of the first outer surface 2111 as endpoints and passing through the center point of the first outer surface 2111. Referring to FIG. 5 and FIG. 6, in the embodiments shown in FIG. 5 and FIG. 6, the first outer surface 2111 is a rectangular structure, and the maximum radial dimension of the first outer surface 2111 is the length of the diagonal of the rectangle. Referring to FIG. 7 and FIG. 8, in the embodiments shown in FIG. 7 and FIG. 8, the first outer surface 2111 is a circular structure, and the maximum radial dimension of the first outer surface 2111 is the diameter of the circular surface. For another example, in some embodiments, if the first outer surface 2111 is a regular hexagon, the maximum radial dimension of the first outer surface 2111 is the length of the diagonal of the hexagon.

When A is greater than or equal to 10 mm, the minimum radial dimension of the first outer surface 2111 is relatively large, and the difference in stiffness between the region of the first wall portion 211 near the outer edge of the first outer surface 2111 and the region near the center point of the first outer surface 2111 is relatively large. In this case, arranging the first weak portion 2145 within the first edge 2143 can provide better effect. The maximum radial dimension of the first outer surface 2111 may be equal to the minimum radial dimension of the first outer surface 2111, for example, when the first outer surface 2111 is a circular structure, the maximum radial dimension of the first outer surface 2111 and the minimum radial dimension of the first outer surface 2111 are both the diameter of the circular structure. The maximum radial dimension of the first outer surface 2111 may be greater than the minimum radial dimension of the first outer surface 2111. For example, when the first outer surface 2111 is a rectangular structure, the maximum radial dimension of the first outer surface 2111 is the length of the diagonal of the rectangular structure, and the minimum radial dimension is the width of the rectangular structure.

Referring to FIG. 5 and FIG. 6, in some embodiments, a thickness of the region of the pressure relief component 214 where the first weak portion 2145 is not provided is D₁, satisfying: 0.1 mm ≤ D₁ ≤ 10 mm.

D₁ represents a thickness of a region of the pressure relief component 214 where the first weak portion 2145 is not provided. The thickness of the region of the pressure relief component 214 where the first weak portion 2145 is not provided can be obtained through cross-sectional scanning.

The thickness of the region of the pressure relief component 214 where the first weak portion 2145 is not provided may be: D₁ = 0.1 mm, 0.5 mm, 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, 10 mm, or the like.

When D₁ is greater than or equal to 0.1 mm, the thickness of the region of the pressure relief component 214 where the first weak portion 2145 is not provided is larger, and the minimum thickness of the first weak portion 2145 disposed on the pressure relief component 214 can also be larger, so that during normal use of the battery cell 20, the first weak portion 2145 is less likely to rupture prematurely due to pressure changes inside the battery cell 20 or external impacts, reducing the risk of premature rupture of the first weak portion 2145 and enhancing the lifespan of the battery cell 20. When D₁ is less than or equal to 10 mm, the thickness of the region of the pressure relief component 214 where the first weak portion 2145 is not provided is not excessively large, so that there is no need to remove much material during processing of the first weak portion 2145, reducing material waste and lowering processing difficulty. Therefore, when 0.1 mm ≤ D₁ ≤ 10 mm, the thickness of the processed first weak portion 2145 is appropriate, reducing the risk of premature rupture of the first weak portion 2145, which is beneficial to enhancing the lifespan of the battery cell 20, as well as reducing material waste and lowering processing difficulty.

Referring to FIG. 7 and FIG. 8, in some embodiments, the housing 21 includes a second wall portion 212 adjacent to the first wall portion 211, where the second wall portion 212 and the first wall portion 211 are directly connected.

The second wall portion 212 is a wall portion adjacent to the first wall portion 211. In the embodiments shown in FIG. 7 and FIG. 8, the second wall portion 212 is a cylindrical peripheral wall. In this case, the second wall portion 212 is directly connected to the first wall portion 211 without requiring a rounded transition.

The second wall portion 212 is directly connected to the first wall portion 211 without requiring a rounded transition between the second wall portion 212 and the first wall portion 211, making manufacturing simpler and more convenient.

In some other embodiments, the second wall portion 212 and the first wall portion 211 are in rounded transition.

Referring again to FIG. 3, FIG. 4, and FIG. 5, the housing 21 includes a shell 215 and an end cap 216, where the shell 215 has an opening 2151 formed on at least one end, the end cap 216 is in one-to-one correspondence with the opening 2151, and the end cap 216 closes the opening 2151. At least one wall of the shell 215 is the first wall portion 211.

The shell 215 includes a side wall and a bottom wall integrally formed, meaning that the shell 215 is manufactured using an integral forming process, such as stamping, casting, or extrusion molding. In other words, the side wall and the bottom wall of the shell 215 are an integral structure.

The shell 215 includes the first wall portion 211, meaning that the first wall portion 211 is one wall of the shell 215. For example, in FIG. 5, the first wall portion 211 is the bottom wall of the shell 215 disposed opposite the end cap 216 in the thickness direction of the first wall portion 211. Certainly, in other embodiments, the first wall portion 211 may alternatively be a side wall of the shell 215.

When the shell 215 includes the first wall portion 211, the pressure relief component 214 is disposed on one wall of the shell 215, and the fluid medium ejected from the pressure relief component 214 is less likely to act on other electrical connection structures on the end cap 216, reducing the risk of short circuits in the battery cell 20.

In some embodiments, the thickness of the region of the pressure relief component 214 where the first weak portion 2145 is not provided is less than a thickness of the end cap 216.

By setting the thickness of the region of the pressure relief component 214 where the first weak portion 2145 is not provided to be less than the thickness of the end cap 216, pressure is easier to relieve from the pressure relief component 214 during pressure relief of the battery cell 20.

In some other embodiments, the battery cell 20 may be of other structures. For example, the housing 21 may include a shell 215 and an end cap 216, an accommodating cavity having an opening 2151 is formed in the interior of the shell 215, the accommodating cavity is configured to accommodate the electrode assembly 22, and the end cap 216 closes the opening 2151, where the end cap 216 is the first wall portion 211.

It should be noted that the battery cell 20 may be of various structures. In some embodiments, the housing 21 may include a shell 215 and two end caps 216, where an accommodating cavity is formed in the interior of the shell 215, and the accommodating cavity is configured to accommodate the electrode assembly 22. The shell 215 has openings 2151 at two ends in the thickness direction of the first wall portion 211, the two openings 2151 are both in communication with the accommodating cavity, and the two end caps 216 respectively close the two openings 2151, where one of the two end caps 216 is the first wall portion 211.

The shell 215 of the housing 21 is provided with openings 2151 at two ends in the thickness direction of the first wall portion 211, and the two end caps 216 respectively close the two openings 2151, where the first wall portion 211 is one of the two end caps 216. A battery cell 20 with this structure facilitates assembly of the battery cell 20 from two ends of the shell 215, reducing the manufacturing difficulty and assembly difficulty of the battery cell 20.

In some embodiments, the pressure relief component 214 is integrally formed with the first wall portion 211.

Integral forming means that the first wall portion 211 and the pressure relief component 214 are provided as an integral structure. For example, the pressure relief component 214 can be formed on the first wall portion 211 using methods such as stamping or cold heading.

The pressure relief component 214 is integrally formed with the first wall portion 211, which requires no additional welding or bonding processes. This is beneficial to reducing the risk of leakage in the pressure relief component 214, and also facilitates consistent burst pressures across multiple processed battery cells 20 during production.

In some other embodiments, the pressure relief component 214 is separately formed from the first wall portion 211, the first wall portion 211 is provided with a pressure relief hole, and the pressure relief component 214 is installed on the first wall portion 211 and covers the pressure relief hole.

"The pressure relief component 214 is separately formed from the first wall portion 211, the first wall portion 211 is provided with a pressure relief hole, and the pressure relief component 214 is installed on the first wall portion 211 and covers the pressure relief hole" means that during manufacturing, a pressure relief hole is provided on the first wall portion 211, the pressure relief component 214 and the first wall portion 211 are provided separately and ultimately connected together. For example, the pressure relief component 214 may be welded to the first wall portion 211. The pressure relief component 214 may be an explosion-proof sheet installed on the first wall portion 211.

The pressure relief component 214 is separately formed from the first wall portion 211 and installed on the first wall portion 211, facilitating processing and manufacturing.

According to some embodiments of this application, a material of the pressure relief component 214 includes a steel material.

It can be understood that in the embodiments where the pressure relief component 214 is integrally formed with the first wall portion 211, the material of the first wall portion 211 includes a steel material. If the first wall portion 211 is the end cap 216 of the housing 21, the end cap 216 is made of steel; if the first wall portion 211 is one wall of the shell 215, the shell 215 is made of a steel material.

For example, the material of the first wall portion 211 may be carbon steel, alloy steel, stainless steel, or the like.

In this embodiment, by using steel as the material of the first wall portion 211, due to the high strength of steel, the first wall portion 211 made of steel has better strength, allowing the first wall portion 211 to be made thinner under a given burst pressure of the battery cell 20, reducing space occupied by the first wall portion 211.

In some embodiments, the steel material is carbon steel or stainless steel.

For example, the carbon steel may be low-carbon steel, medium-carbon steel, or high-carbon steel.

In this embodiment, using carbon steel or stainless steel as the material of the first wall portion 211 is cost-effective and facilitates manufacturing.

In some embodiments, the material of the pressure relief component 214 includes aluminum alloy.

It can be understood that in the embodiments where the pressure relief component 214 is integrally formed with the first wall portion 211, the material of the first wall portion 211 includes aluminum alloy. If the first wall portion 211 is the end cap 216, the end cap 216 may be made of aluminum alloy; if the first wall portion 211 is a wall of the shell 215, the shell 215 may be made of aluminum alloy.

Aluminum alloy has the characteristics of light weight and good ductility, making it easier to process the first groove 2141 on the pressure relief component 214. In the embodiments where the pressure relief component 214 is integrally formed with the first wall portion 211, the first wall portion 211 is made of aluminum alloy, effectively reducing the forming difficulty of the first wall portion 211.

In some embodiments, the aluminum alloy includes the following components by mass percentage: aluminum ≥ 99.6%, copper ≤ 0.05%, iron ≤ 0.35%, magnesium ≤ 0.03%, manganese ≤ 0.03%, silicon ≤ 0.25%, titanium ≤ 0.03%, vanadium ≤ 0.05%, zinc ≤ 0.05%, and other individual elements ≤ 0.03%.

This aluminum alloy belongs to the 3xxx series aluminum. This aluminum alloy has lower hardness and better formability, reducing the processing difficulty of the first groove 2141, improving the processing precision of the first groove 2141, and enhancing the pressure relief consistency of the pressure relief component 214.

In some embodiments, the aluminum alloy includes the following components by mass percentage: aluminum ≥ 96.7%, 0.05% ≤ copper ≤ 0.2%, iron ≤ 0.7%, manganese ≤ 1.5%, silicon ≤ 0.6%, zinc ≤ 0.1%, other individual element components ≤ 0.05%, and total other element components ≤ 0.15%.

This aluminum alloy belongs to the 5xxx series aluminum, and the pressure relief component 214 made of this aluminum alloy has higher hardness, greater strength, and good resistance to damage.

An embodiment of this application further provides a battery 100, where the battery 100 includes the foregoing battery cell 20.

An embodiment of this application further provides an electric device, where the electric device includes the foregoing battery cell 20.

According to some embodiments of this application, refer to FIG. 3 to FIG. 9.

An embodiment of this application provides a battery cell 20, where the battery cell 20 includes a housing 21 and a pressure relief component 214. The housing 21 has a first wall portion 211, where the first wall portion 211 has a first outer surface 2111 facing away from an interior of the housing 21, and the pressure relief component 214 is disposed on the first wall portion 211. The pressure relief component 214 includes a first weak portion 2145, and the pressure relief component 214 is configured as capable of rupturing along at least a part of the first weak portion 2145 during pressure relief of the battery cell 20. A minimum radial dimension of the first outer surface 2111 is A, a radial direction is a direction passing through a center point of the first outer surface 2111, and an outer edge of the first outer surface 2111 is offset toward the center point of the first outer surface 2111 by a predetermined distance L₁ to form a first edge 2143, where L₁ = 0.05*A. Along a thickness direction of the first wall portion 211, a projection of the first weak portion 2145 on the first outer surface 2111 is located within the first edge 2143. The outer edge of the first outer surface 2111 is offset toward the center point of the first outer surface 2111 by 0.05A to form the first edge 2143, and the first edge 2143 defines a first region 2144 on the first wall portion 211. The first region 2144 is close to the center of the wall portion, and the first region 2144 is a region with relatively small stiffness, and its ability to resist deformation is relatively weak. When the battery cell 20 releases internal pressure, the first region 2144 undergoes significant deformation under the action of gas, causing the first weak portion 2145 disposed in the first region 2144 to easily deform and rupture. Therefore, under the same burst pressure, the thickness of the first weak portion 2145 disposed in the first region 2144 can be greater. As a result, during normal use of the battery cell 20, the first weak portion 2145 is less likely to rupture prematurely due to pressure changes inside the battery cell 20 or external impacts, reducing the risk of premature rupture of the first weak portion 2145 and enhancing the lifespan of the battery cell 20. Furthermore, a greater thickness of the first weak portion 2145 makes manufacturing easier, lowering a precision requirement for manufacturing equipment.

In some embodiments, the housing 21 is a cylindrical structure, the housing 21 includes a second wall portion 212, and the second wall portion 212 surrounds the first wall portion 211. The first outer surface 2111 is a circular structure, and the minimum radial dimension of the first outer surface 2111 is a diameter of the circular surface. The housing 21 is a cylindrical structure, and the second wall portion 212 surrounds the first wall portion 211, so the second wall portion 212 is a peripheral wall of the housing 21, and the first wall portion 211 is connected to one end of the second wall portion 212. In this case, the first outer surface 2111 is a circular structure, the minimum radial dimension of the first outer surface 2111 is the diameter of the circular surface, and the first edge 2143 is a circle with a diameter of 0.9A.

In some other embodiments, the housing 21 is a prismatic structure, and the first outer surface 2111 is a rectangular structure. The first outer surface 2111 includes two first long sides 21111 and two first short sides 21112, where the two first long sides 21111 are disposed opposite each other along a width direction of the first wall portion 211, the two first short sides 21112 are disposed opposite each other along a length direction of the first wall portion 211. The two first long sides 21111 and the two first short sides 21112 are offset toward the center point of the first outer surface 2111 by the predetermined distance L₁ to form the first edge 2143. The first edge 2143 is a rectangular structure, the long sides of the first edge 2143 are formed by offsetting the two first long sides 21111 of the first outer surface 2111 toward the center point of the first outer surface 2111, and the short sides of the first edge 2143 are formed by offsetting the two first short sides 21112 of the first outer surface 2111 toward the center point of the first outer surface 2111.

The first weak portion 2145 includes at least one priority burst region 2142, where the priority burst region 2142 ruptures earlier than other regions of the first weak portion 2145 during pressure relief of the battery cell 20. A minimum distance between a projection of the priority burst region 2142 on the first outer surface 2111 along the thickness direction of the first wall portion 211 and the center point of the first outer surface 2111 is L₂, and a minimum thickness of the priority burst region 2142 is D, satisfying: 5 mm ≤ L₂ ≤ 40 mm, and 0.05 mm ≤ D ≤ 0.6 mm. The first weak portion 2145 has a priority burst region 2142, and during pressure relief of the battery cell 20, the priority burst region 2142 ruptures first, and then other regions of the first weak portion 2145 gradually rupture along the extension direction of the first weak portion 2145. When D is greater than or equal to 0.05 mm, the minimum thickness of the priority burst region 2142 is relatively large, making the priority burst region 2142 less likely to rupture prematurely due to pressure changes inside the battery cell 20 or external impacts, which is beneficial to enhancing the lifespan of the battery cell 20. When D is less than or equal to 0.6 mm, the minimum thickness of the priority burst region 2142 is not excessively large, enabling the priority burst region 2142 to rupture promptly during pressure relief of the battery cell 20, which is beneficial to improving the timeliness of pressure relief of the battery cell 20. Therefore, when 0.05 mm ≤ D ≤ 0.6 mm, the priority burst region 2142 is less likely to rupture due to pressure changes inside the battery cell 20 or external impacts, and the priority burst region 2142 can also rupture promptly, which is beneficial to improving the timeliness of pressure relief of the battery cell 20. When L₂ is greater than or equal to 5 mm, the minimum distance between the projection of the priority burst region 2142 on the first outer surface 2111 along the thickness direction of the first wall portion 211 and the center point of the first outer surface 2111 is relatively large, and the stiffness at the position of the priority burst region 2142 is higher, making the priority burst region 2142 less likely to rupture prematurely due to pressure changes inside the battery cell 20 or external impacts during normal use of the battery cell 20, reducing the risk of premature rupture of the priority burst region 2142. When L₂ is less than or equal to 40 mm, the minimum distance between the projection of the priority burst region 2142 on the first outer surface 2111 along the thickness direction of the first wall portion 211 and the center point of the first outer surface 2111 is not excessively large, which allows the priority burst region 2142 to undergo significant deformation under the action of gas during pressure relief of the battery cell 20, enabling the priority burst region 2142 to rupture promptly, thereby improving the timeliness of pressure relief of the battery cell 20. Therefore, when 5 mm ≤ L₂ ≤ 40 mm, the priority burst region 2142 is less likely to rupture due to pressure changes inside the battery cell 20 or external impacts, and the priority burst region 2142 can also rupture promptly, which is beneficial to improving the timeliness of pressure relief of the battery cell 20.

The pressure relief component 214 is provided with a first groove 2141, and the pressure relief component 214 has the first weak portion 2145 formed in a region where the first groove 2141 is provided. The first groove 2141 includes a first groove segment 2141a and a second groove segment 2141b, where the first groove segment 2141a and the second groove segment 2141b are connected. A centerline of a bottom surface of the first groove segment 2141a intersects with a centerline of a bottom surface of the second groove segment 2141b at a first intersection point 21421, an extension direction of the centerline of the bottom surface of the first groove segment 2141a is parallel to an extension direction of the first groove segment 2141a, and an extension direction of the centerline of the bottom surface of the second groove segment 2141b is parallel to the extension direction of the second groove segment 2141b. A region of the first weak portion 2145 within a range with a radius R and centered at the first intersection point 21421 is the priority burst region 2142, where A > R = 5 mm. The stress at the intersection position of the first groove segment 2141a and the second groove segment 2141b is more concentrated, and a region of the first weak portion 2145 within a range with a radius of 5 mm and centered at the first intersection point 21421 is the priority burst region 2142. During pressure relief of the battery cell 20, the priority burst region 2142 ruptures first, and then the first groove segment 2141a and the second groove segment 2141b gradually rupture along their extension directions, thereby implementing rapid pressure relief of the battery cell 20.

The first groove 2141 includes a third groove segment 2141c, where the first groove segment 2141a and the third groove segment 2141c are disposed opposite each other, and the second groove segment 2141b connects the first groove segment 2141a and the third groove segment 2141c. The centerline of the bottom surface of the second groove segment 2141b intersects with a centerline of a bottom surface of the third groove segment 2141c at a second intersection point 21422, and an extension direction of the centerline of the bottom surface of the third groove segment 2141c is parallel to an extension direction of the third groove segment 2141c. A region of the first weak portion 2145 within a range with a radius R and centered at the second intersection point 21422 is the priority burst region 2142. The stress at the intersection position of the second groove segment 2141b and the third groove segment 2141c is more concentrated, and a region of the first weak portion 2145 within a range with a radius of 5 mm and centered at the second intersection point 21422 is also a priority burst region 2142. During pressure relief of the battery cell 20, the two priority burst regions 2142 rupture first, and then the first groove segment 2141a, the second groove segment 2141b, and the third groove segment 2141c gradually rupture along their extension directions, thereby implementing rapid pressure relief of the battery cell 20.

The foregoing descriptions are merely preferred embodiments of this application and are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery cell, comprising:
a housing, having a first wall portion, wherein the first wall portion has a first outer surface facing away from an interior of the housing; and
a pressure relief component, disposed on the first wall portion, wherein the pressure relief component comprises a first weak portion, and the pressure relief component is configured as capable of rupturing along at least a part of the first weak portion during pressure relief of the battery cell; wherein
a minimum radial dimension of the first outer surface is A, a radial direction is a direction passing through a center point of the first outer surface, and an outer edge of the first outer surface is offset toward the center point of the first outer surface by a predetermined distance L₁ to form a first edge, wherein L₁ = 0.05*A; and
along a thickness direction of the first wall portion, a projection of the first weak portion on the first outer surface is located within the first edge.

2. The battery cell according to claim 1, wherein the housing is a cylindrical structure, the housing comprises a second wall portion, the second wall portion surrounds the first wall portion, the first outer surface is a circular structure, and the minimum radial dimension of the first outer surface is a diameter of the circular surface.

3. The battery cell according to claim 1, wherein the housing is a prismatic structure, the first outer surface is a rectangular structure, and the first outer surface comprises two first long sides and two first short sides, wherein the two first long sides are disposed opposite each other along a width direction of the first wall portion, the two first short sides are disposed opposite each other along a length direction of the first wall portion, and the two first long sides and the two first short sides are offset toward the center point of the first outer surface by the predetermined distance L₁ to form the first edge.

4. The battery cell according to any one of claims 1 to 3, wherein the first weak portion comprises at least one priority burst region, wherein the priority burst region is configured to rupture earlier than other regions of the first weak portion during pressure relief of the battery cell, a minimum distance between a projection of the priority burst region on the first outer surface along the thickness direction of the first wall portion and the center point of the first outer surface is L₂, and a minimum thickness of the priority burst region is D, satisfying: 5 mm ≤ L₂ ≤ 40 mm, and 0.05 mm ≤ D ≤ 0.6 mm.

5. The battery cell according to claim 4, wherein 0.1 mm ≤ D ≤ 0.5 mm.

6. The battery cell according to claim 4 or 5, wherein 10 mm ≤ L₂ ≤ 30 mm.

7. The battery cell according to any one of claims 4 to 6, wherein the pressure relief component is provided with a first groove; the pressure relief component has the first weak portion formed in a region where the first groove is provided; the first groove comprises a first groove segment and a second groove segment, wherein the first groove segment and the second groove segment are connected, a centerline of a bottom surface of the first groove segment intersects with a centerline of a bottom surface of the second groove segment at a first intersection point, an extension direction of the centerline of the bottom surface of the first groove segment is parallel to an extension direction of the first groove segment, and an extension direction of the centerline of the bottom surface of the second groove segment is parallel to an extension direction of the second groove segment; and a region of the first weak portion within a range with a radius R and centered at the first intersection point is the priority burst region, wherein A > R = 5 mm.

8. The battery cell according to claim 7, wherein the first groove comprises a third groove segment, wherein the first groove segment and the third groove segment are disposed opposite each other, the second groove segment connects the first groove segment and the third groove segment, the centerline of the bottom surface of the second groove segment intersects with a centerline of a bottom surface of the third groove segment at a second intersection point, an extension direction of the centerline of the bottom surface of the third groove segment is parallel to an extension direction of the third groove segment, and a region of the first weak portion within a range with a radius R and centered at the second intersection point is the priority burst region.

9. The battery cell according to any one of claims 1 to 8, wherein a maximum radial dimension of the first outer surface is B, satisfying: B ≥ A ≥ 10 mm.

10. The battery cell according to any one of claims 1 to 9, wherein a thickness of a region of the pressure relief component where the first weak portion is not provided is D₁, satisfying: 0.1 mm ≤ D₁ ≤ 10 mm.

11. The battery cell according to any one of claims 1 to 10, wherein the housing comprises a second wall portion adjacent to the first wall portion, wherein the second wall portion and the first wall portion are directly connected.

12. The battery cell according to any one of claims 1 to 11, wherein the housing comprises:
a shell, having an opening on at least one end; and
an end cap, in one-to-one correspondence with the opening, wherein the end cap closes the opening; wherein
at least one wall of the shell is the first wall portion.

13. The battery cell according to claim 12, wherein a thickness of a region of the pressure relief component where the first weak portion is not provided is less than a thickness of the end cap.

14. The battery cell according to any one of claims 1 to 13, wherein a material of the pressure relief component includes an aluminum material or a steel material.

15. The battery cell according to any one of claims 1 to 14, wherein the pressure relief component is integrally formed with the first wall portion.

16. The battery cell according to any one of claims 1 to 14, wherein the pressure relief component is separately formed from the first wall portion, the first wall portion is provided with a pressure relief hole, and the pressure relief component is installed on the first wall portion and covers the pressure relief hole.

17. A battery, comprising the battery cell according to any one of claims 1 to 16.

18. An electric device, comprising the battery cell according to any one of claims 1 to 16.
